# FASCICULE DE BREVET EUROPEEN

(11) **EP 1 551 928 B1**
(45) Date de publication et mention de la délivrance du brevet: **05.09.2018**
(21) Numéro de dépôt: 03762703.1
(22) Date de dépôt: 16.06.2003
(51) Int. Cl.: C09D 5/44, C25D 13/04

(54) **SUPPORT SOLIDE COMPORTANT UNE SURFACE CONDUCTRICE OU SEMI-CONDUCTRICE DE L'ELECTRICITE FONCTIONNALISEE, SON PROCEDE DE PREPARATION ET SES UTILISATIONS**
FESTES SUBSTRAT ENTHALTEND EINE FUNKTIONALISIERTE ELEKTRISCH LEITENDE ODER HALB-LEITENDE OBERFLÄCHE, VERFAHREN ZUR DESSEN HERSTELLUNG UND SEINE VERWENDUNGEN
SOLID SUPPORT COMPRISING A FUNCTIONALIZED ELECTRICITY CONDUCTOR OR SEMICONDUCTOR SURFACE, METHOD FOR PREPARING SAME AND USES THEREOF

(30) Priorité: 04.07.2002 FR 0208381
(43) Date de publication de la demande: 13.07.2005
(73) Titulaire: Commissariat à l'Énergie Atomique et aux Énergies Alternatives, 75015 Paris (FR)
(72) Inventeur: BUREAU, Christophe, F-92150 Suresnes (FR); MOUANDA, Brigitte, F-78730 Saint Arnoult en Yvelines (FR); AMEUR, Sami, F-91190 Gif-sur-Yvette (FR); CHARLIER, Julienne, F-91190 Gif-sur-Yvette (FR); PALACIN, Serge, F-78180 Montigny le Bretonneux (FR)
(74) Mandataire: Gevers & Orès
(86) Numéro de dépôt international: PCT/FR2003/001814
(87) Numéro de publication internationale: WO 2004/005410

(56) Documents cités:
- EP-A- 0 038 244
- EP-A- 0 665 275
- WO-A-02/098926
- XUDONG LOU: "Electrografting of Preformed Aliphatic Polyesters onto Metallic Surfaces" AMERICAN CHEMICAL SOCIETY, [en ligne] vol. 18, - 3 janvier 2002 (2002-01-03) pages 2785-2788, XP002223305 Extrait de l'Internet: <URL:http://pubs.acs.org/isubscribe/journa ls/langd5/asap/pdf/la011289g.pdf> [extrait le 2002-12-02]

## Description

La présente Invention est relative à un support solide fonctionnalisé comportant une surface conductrice ou semi-conductrice de l'électricité recouverte d'une couche organique électro-greffée fonctionnalisée au sein de laquelle au moins 90 % du nombre des groupements fonctionnels est accessible, au procédé de préparation d'un tel support, ainsi qu'à ses utilisations, notamment à titre de primaire d'adhésion pour la fixation de molécules d'intérêt ou d'objets porteurs d'une fonction complémentaire ("velcro® moléculaire").

La fonctionnalisation d'une surface est l'opération par laquelle on parvient à fixer une molécule d'intérêt (par exemple une molécule ayant des propriétés avérées en solution) sur une surface, de façon - au moins - à ce qu'elle y conserve tout ou partie de ses propriétés. La fonctionnalisation d'une surface suppose donc que l'on dispose de la molécule d'intérêt et d'un procédé associé pour la fixer sur la surface.

La molécule d'intérêt étant le plus souvent une molécule organique (ou organo-métallique), le procédé le plus souvent utilisé consiste à tirer partie de la très large bibliothèque de réactions de la chimie organique : la logique est seulement de pouvoir trouver des groupements fonctionnels, respectivement sur la surface et sur la molécule d'intérêt, qui soient compatibles, c'est-à-dire qui puissent facilement - et si possible rapidement - réagir entre eux.

Lorsque l'on dispose par exemple d'une surface possédant des groupements hydroxyle ou amine, on peut la fonctionnaliser en dotant la molécule d'intérêt par exemple de groupements isocyanate ou siloxane tel que cela est par exemple décrit dans la demande de brevet EP-A-1 110 946, dans la demande internationale WO 00/51732 ou dans le brevet US 6,258,454 ou bien encore de chlorures d'acide tel que cela est décrit dans la demande de brevet FR-A-2 781 232.

Lorsque la molécule d'intérêt ne dispose pas de groupements fonctionnels directement compatibles avec ceux de la surface, on peut pré-fonctionnaliser cette surface avec une molécule organique intermédiaire bifonctionnelle, dont l'un des groupements fonctionnels est compatible avec ceux de la surface, et l'autre avec ceux de la molécule que l'on veut fixer. On dit parfois que la molécule est un primaire d'adhésion (voir par exemple : E.P. Plueddmann, in "Fundamentals of Adhesion", L.H. Lee (Ed.), p.279, Plenum Press, New-York (1990)).

Selon la présente Invention, c'est la fixation de ce primaire d'adhésion qu'il convient de considérer comme la molécule d'intérêt : on s'intéresse ici à la façon de fixer un premier fragment organique sur une surface, en particulier lorsqu'elle est minérale, les étapes suivantes de post-fonctionnalisation étant considérées comme des réactions organiques pures.

De ce point de vue, on constate que la fonctionnalisation d'une surface n'est qu'un cas particulier de réactions de la chimie organique où l'un des deux réactifs est une surface, plutôt qu'une molécule en solution. Certes la cinétique associée aux réactions hétérogènes entre une solution et une surface est sensiblement différente de la réaction analogue en phase homogène, mais les mécanismes réactionnels sont - sur le principe - identiques.

Dans certains cas, on active la surface en la pré-traitant de façon à y créer des groupements fonctionnels ayant une réactivité supérieure, de façon à obtenir une réaction plus rapide. Il peut notamment s'agir de groupements fonctionnels instables, formés de façon transitoire, comme par exemple des radicaux formés par oxydation brutale de la surface, soit par voie chimique, soit par voie d'irradiation :
- on peut fonctionnaliser une surface portant des groupements azotés en la bombardant par des particules (ions, électrons, protons...) de façon à transformer ces groupements azotés en nitrènes, qui peuvent réagir avec un grand nombre de groupements fonctionnels organiques tel que cela a déjà été décrit dans la demande internationale WO 98/22542 ainsi que dans le brevet US 6,022,597 ;
- on peut fonctionnaliser une surface en lui faisant subir un traitement plasma, dans lequel le gaz de plasma contient un monomère susceptible de réagir avec les groupements réactifs formés lors de l'irradiation tel que cela a déjà été décrit dans le brevet US 6,287,687 et dans la demande internationale WO 01/34313 ;
- on peut fonctionnaliser une surface hydroxylée en l'oxydant fortement par des sels métalliques, de façon à y fabriquer des radicaux susceptibles d'initier des réactions de polymérisation organique tel que cela a par exemple déjà été décrit dans les brevets US 4,421,569, US 5,043,226 et US 5,785,791 ;
- on peut fonctionnaliser une surface par l'intermédiaire de radicaux, soit par irradiation aux ions lourds comme décrit par exemple dans le brevet US 6,306,975, soit par voie thermique comme décrit par exemple dans la demande internationale WO 98/49206, soit encore par voie photochimique comme décrit par exemple dans la demande internationale WO 99/16907, etc...

Dans tous ces exemples, dont la liste n'est pas exhaustive, on modifie donc soit la surface soit la molécule d'intérêt, de façon à ce que - une fois modifiée(s) - l'accrochage entre les deux entités se ramène à une réaction connue par ailleurs dans la bibliothèque des réactions de la chimie organique.

Or, on observe que ce raisonnement n'est possible que dans la mesure où la surface a une structure électronique analogue à celle d'un isolant : dans le langage des physiciens, on peut dire qu'il faut que la surface possède des états localisés. Dans celui des chimistes, qu'elle possède des groupements fonctionnels.

Lorsque la surface est un conducteur ou un semi-conducteur non ou peu dopé, de tels états localisés n'existent pas : les états électroniques de la surface sont des états délocalisés. En d'autres termes, la notion de "groupement fonctionnel" (au sens de la chimie organique) n'a pas de sens, et il est ainsi impossible d'utiliser la bibliothèque des réactions de la chimie organique pour fixer une molécule d'intérêt sur une surface.

Deux exceptions notables existent : ce sont les réactions chimiques spontanées des fonctions thiols (-SH, voir notamment : Z. Mekhalif et al., Langmuir, 1997, 13, 2285) et des isonitriles (-N=C, voir par exemple: V. Huc et al., J. of Physical Chemistry B, 1999, 103, 10489) sur les surfaces métalliques, et notamment sur les surfaces d'or.

Or, ces réactions ne sont pas exploitables dans toutes les situations. En effet, les thiols, par exemple, donnent lieu à des liaisons soufre/métal fragiles. Ces liaisons sont rompues, par exemple, lorsque le métal est ultérieurement polarisé cathodiquement ou anodiquement, pour former respectivement des thiolates et des sulfonates, qui désorbent.

Mis à part ces deux exemples isolés, il n'existe pas de réaction chimique simple permettant de fonctionnaliser des surfaces conductrices ou semi-conductrices de l'électricité.

Le moyen le plus employé pour réaliser la fixation de molécules organiques sur des surfaces conductrices ou semi-conductrices de l'électricité est de contourner la difficulté en se ramenant à un problème connu. Il s'agit de former sur ces surfaces, au préalable, des groupements hydroxyle, en assurant la promotion d'une couche d'oxyde (totalement ou partiellement hydratée) sur le métal. Sur le graphite, qui ne possède pas d'oxyde solide, l'anodisation produit cependant des groupements hydroxyle qui sont exploitables (on peut, dans certaines conditions, y fabriquer également des groupements carboxyles). Lorsque l'on a pu former des groupements hydroxyles sur la surface, on est ramené à une surface qui possède des états électroniques de surface localisés, c'est-à-dire des groupements fonctionnels, et on est ramené à un problème connu. En particulier, il est alors possible d'appliquer tous les procédés de fonctionnalisation qui ont été listés plus haut pour les surfaces d'isolants.

Cependant, outre le fait qu'il est impossible de former une couche d'oxyde sur l'or ainsi que sur de nombreux métaux nobles, on délègue à la couche d'oxyde et à son mode d'obtention une large part de la responsabilité dans la solidité de l'interface qui sera fabriquée entre la molécule organique d'intérêt et la surface métallique (or certains oxydes, en particulier lorsqu'ils sont non stoechiométriques, ne sont pas couvrants voire non adhérents). De plus, cette voie nécessite au moins deux ou trois étapes pour aboutir à la fixation d'une molécule d'intérêt, puisqu'il faut d'abord construire la couche d'oxyde avant d'accrocher la molécule elle-même (deux étapes), ou bien avant d'accrocher un primaire d'adhésion qui permettra l'accrochage de la molécule d'intérêt (trois étapes).

Il est également possible de fixer des fragments organiques sur des surfaces conductrices et semi-conductrices par voie électrochimique.

Le procédé décrit dans la demande internationale WO 98/44172 permet en effet de fixer des groupements fonctionnels organiques sur des surfaces conductrices. Il s'agit d'un procédé par lequel une surface conductrice est mise sous potentiel (cathodique) dans une solution contenant des sels d'aryl diazonium, fonctionnalisés par le groupement fonctionnel que l'on veut fixer sur la surface. Or, les sels d'aryl diazonium sont fabriqués à partir d'une amine aromatique, grâce à une réaction de diazotisation utilisant du nitrite de sodium en milieu chlorhydrique. Cette étape nécessite un pH très bas, et n'est donc pas compatible avec tous les groupements fonctionnels que l'on souhaite fixer. On sait par exemple qu'il est impossible de diazotiser une amine aromatique porteuse d'un groupement succinimide (utile pour fixer une molécule d'intérêt portant des groupements hydroxyde ou amine), d'un groupement amine ou bien encore d'un groupement pyridine, et que les groupements fonctionnels diazonium sont difficilement compatibles avec les liaisons insaturées, dont elles peuvent facilement provoquer la polymérisation par voie radicalaire.

Dans certains cas, lorsque aucun groupement fonctionnel n'est compatible à la fois avec ceux de la molécule d'intérêt et avec la réaction de diazotisation, l'utilisation du procédé de greffage des sels de diazonium nécessite de passer par une étape intermédiaire au cours de laquelle la couche électro-greffée est fonctionnalisée par un primaire d'adhésion bi-fonctionnel, dont l'un des groupements au moins est compatible avec les groupements fonctionnels de la molécule d'intérêt.

De plus, ce procédé ne permet pas - dans la pratique - de réaliser des couches épaisses, ce qui conduit à un nombre de groupements fonctionnels greffés relativement faible, et très proches de la surface. Les groupements fonctionnels qui ont été greffés sont globalement modérément accessibles pour des réactions de fonctionnalisation ultérieure avec une molécule organique. La conséquence pratique la plus directe de cette remarque est que les réactions de post-fonctionnalisation sur les surfaces conductrices recouvertes d'une couche organique selon ce procédé sont lentes.

Or, on sait, depuis les années 1980, réaliser l'électro-greffage de polymères issus de monomères vinyliques ou cycliques sur des surfaces conductrices et semi-conductrices de l'électricité comme cela est décrit par exemple dans la demande de brevet EP-A-0 038 244. Ce procédé permet de réaliser des liaisons chimiques covalentes entre un polymère organique et une surface conductrice ou semi-conductrice de l'électricité. Ces couches organiques constituent *a priori* des candidates idéales comme couche primaire d'accrochage de molécules organiques ou organométalliques, puisque lorsqu'on greffe une chaîne de polymère en un point de la surface, on greffe un grand nombre de groupements fonctionnels par site de surface : le nombre de points d'accrochage d'une molécule organique par unité de surface est alors démultiplié. Pourtant, l'utilisation des polymères électro-greffés tels que décrits dans ce document antérieur n'est pas évidente, car les caractéristiques du procédé ne permettent pas de greffer directement sur la surface une variété suffisante de groupements fonctionnels utilisables. Par "greffage direct", on entend le fait d'utiliser des monomères vinyliques ou cycliques qui comportent les groupements fonctionnels que l'on désire fixer sur la surface, ou qui comportent des précurseurs simples originaux (c'est-à-dire des précurseurs qui ne sont pas seulement des groupements protégés) de groupements fonctionnels désirés.

Il a par ailleurs déjà été proposé, notamment dans la demande de brevet EP 0 665 275 de former un film polymère à partir de monomères électrogreffable selon un procédé au cours duquel la croissance des chaînes est interrompue par des groupements fonctionnels. Ainsi, selon ce procédé, les groupements fonctionnels d'intérêt ne sont pas placés directement sur le monomère qui sera utilisé pour l'électro-greffage, mais interrompent essentiellement la croissance avec un inhibiteur porteur du groupement fonctionnel voulu. On note en particulier que ce procédé ne délivre qu'un seul groupement fonctionnel par chaîne, et ne permet pas de disposer d'un grand nombre de groupements accessibles, ce qui est notamment préjudiciable lorsque la molécule sonde est volumineuse. De plus, il a été démontré que la croissance des chaînes polymères sur la surface est nécessairement anionique (C. Bureau et al., Macromolecules, 1997, 30, 333), et il est probable que les inhibiteurs radicalaires introduits selon ce procédé se retrouvent dans le film en fin de synthèse parce qu'ils sont adsorbés et/ou réduits sur la surface de l'électrode (ils sont en général électro-actifs), et non parce qu'ils interrompent la croissance des chaînes.

C'est dans la compréhension actuelle des mécanismes de l'électrogreffage, et dans les *a priori* qui y sont associés, que l'on peut comprendre les raisons pour lesquelles l'Homme de l'art ne s'est pas orienté vers l'utilisation de monomères présentant des groupements fonctionnels variés.

Il semble aujourd'hui admis que l'obtention de films polymères greffés par électrogreffage de monomères vinyliques activés sur surfaces conductrices procède grâce à une électro-initiation de la réaction de polymérisation à partir de la surface, suivie d'une croissance des chaînes, monomère par monomère (C. Bureau, *et al.,* 1997, pré-cité ; C. Bureau and J. Delhalle, Journal of Surface Analysis, 1999, 6(2), 159 et C. Bureau, et al., Journal of Adhesion, 1996, 58, 101).

Cette réaction de polymérisation est représentée sur le schéma A ci-après :

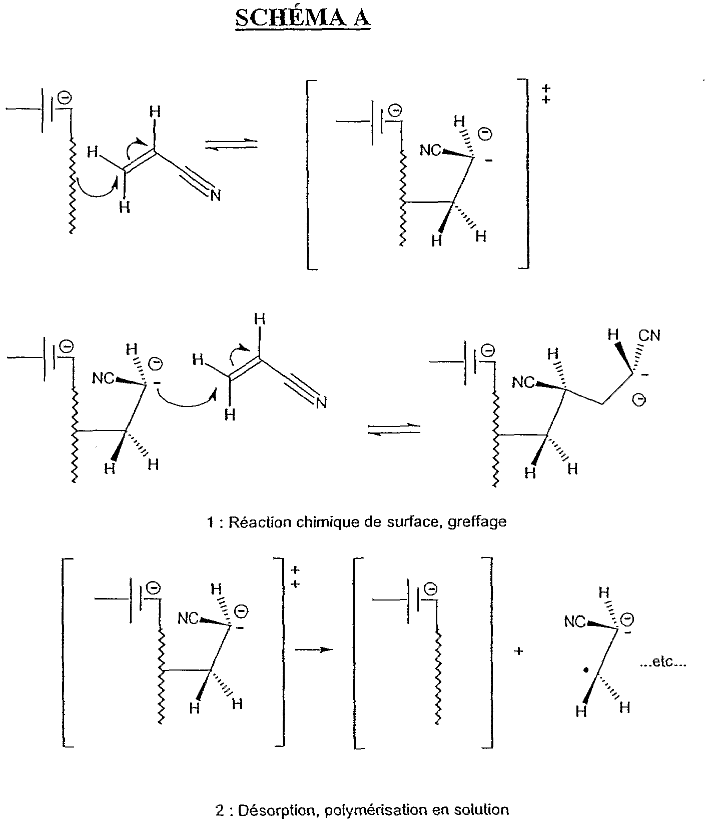

Dans ce schéma, la réaction de greffage correspond à l'étape 1, où la croissance a lieu à partir de la surface. L'étape 2 est la réaction parasite principale, qui conduit à l'obtention d'un polymère non greffé.

La croissance des chaînes greffées s'effectue donc par polymérisation purement chimique, c'est-à-dire indépendamment de la polarisation de la surface conductrice qui a donné lieu au greffage. Cette étape est donc sensible à (elle est en particulier interrompue par) la présence d'inhibiteurs chimiques de cette croissance.

Dans l'exemple de la réaction représentée sur le schéma A ci-dessus, où l'on a considéré l'électrogreffage de l'acrylonitrile sous polarisation cathodique, la croissance des chaînes greffées s'effectue par polymérisation anionique. Cette croissance est interrompue notamment par des protons, et il a été démontré que la teneur en protons constitue même le paramètre majeur qui pilote la formation de polymère en solution, ainsi que les informations récupérées en cours de synthèse, et notamment l'allure des voltammogrammes qui accompagnent la synthèse (C. Bureau, Journal of Electroanalytical Chemistry, 1999, 479, 43).

Les traces d'eau, et plus généralement les protons labiles des solvants protiques, constituent des sources de protons préjudiciables à la croissance des chaînes greffées. Avant même que les mécanismes réactionnels de l'électrogreffage de monomères vinyliques aient été compris, ce point technique bloquant avait été clairement identifié par l'Homme de l'art.

C'est pourquoi, il apparaît impossible d'envisager une réaction d'électropolymérisation mettant en oeuvre des monomères comportant des groupements fonctionnels sources de protons (monomères protiques).

Du fait de ces limitations sévères portant à la fois sur les solvants et les types de monomères de synthèse, l'électrogreffage de monomères vinyliques sur les surfaces conductrices ou semi-conductrices de l'électricité reste un procédé ne permettant que le greffage de polymères relativement peu intéressants du point de vue de la fonctionnalisation chimique des surfaces.

Pour cette raison, les films de polymères électro-greffés ont surtout été utilisés pour réaliser des fonctions passives : anti-corrosion ou lubrification comme cela a par exemple déjà été décrit dans les demandes de brevet EP-A-0 038 244 et FR-A-2 672 661.

La Demande Internationale WO 02/098926 publiée le 12 décembre 2002 décrit également un procédé de fonctionnalisation par électrogreffage de surfaces conductrices de l'électricité, les surfaces conductrices étant revêtues d'un polymère porteur de groupements susceptibles de s'attacher à des groupements réactifs complémentaires.

Un besoin existe donc de pouvoir réaliser la fonctionnalisation de surfaces conductrices ou semi-conductrices de l'électricité par des couches organiques présentant une grande variété de groupements fonctionnels, ainsi qu'un grand nombre de groupements fonctionnels d'intérêt accessibles par unité de surface, de façon à assurer des réactions de post-fonctionnalisation plus rapides que celles disponibles actuellement.

La Demanderesse s'est en particulier donnée pour but de résoudre le problème d'interface minéral/organique de façon à pourvoir à un support conducteur ou semi-conducteur de l'électricité comportant une zone d'accroche fonctionnalisée ou "velcro® moléculaire" utile pour la fixation de molécules d'intérêt (molécules sondes) ou d'objets porteurs d'une fonction complémentaire.

Les détails techniques de la présente Invention, ainsi que les exemples de réalisation, démontrent qu'il est notamment possible, contrairement à l'enseignement de l'art antérieur, d'obtenir des groupements fonctionnels protiques - soit directement, soit indirectement - par électrogreffage, en ayant recours à des monomères vinyliques ou cycliques portant eux-mêmes des groupements protiques.

La présente Invention a donc pour premier objet un support solide comportant au moins une région conductrice et/ou semi-conductrice de l'électricité à oxyde réductible sur sa surface, caractérisé par le fait qu'au moins une zone de ladite surface est fonctionnalisée par un film organique électro-greffé obtenu à partir de précurseurs organiques électro-actifs comportant chacun au moins un groupement fonctionnel d'intérêt, lesdits précurseurs organiques étant choisis parmi les monomères vinyliques ou cycliques porteurs de groupements protiques, éventuellement en mélange avec des précurseurs organiques électro-actifs ne comportant pas de groupement fonctionnel d'intérêt, et par le fait que le nombre de groupements fonctionnels d'intérêt accessibles pour la formation d'une liaison covalente, ionique ou hydrogène avec un groupement complémentaire au sein dudit film représente au moins 90 % du nombre total des groupements organiques fonctionnels d'intérêt.

Une des spécificités importantes de la présente Invention est que l'on réalise, par électrogreffage de revêtements organiques, un tapis de groupements fonctionnels d'intérêt dont une grande partie est accessible pour des réactions de post-fonctionnalisation - typiquement plus de 90 %.

L'électrogreffage de revêtements organiques permet de fabriquer des liaisons d'interface de nature covalente entre un matériau conducteur ou semi-conducteur de l'électricité et un matériau organique.

Le film organique fonctionnalisé du support conforme à la présente Invention constitue un véritable "velcro® moléculaire" sur lequel on peut ensuite tirer parti directement de toutes les propriétés du précurseur qui a été électro-greffé, qu'il s'agisse de propriétés chimiques ou physiques, pour y fixer divers objets, comme par exemple des molécules (chimiques ou biochimiques), des polymères, des cellules, ou même obtenir une fonction de collage envers un objet macroscopique, par exemple par adhésion chimique sur le précurseur greffé.

Selon la présente Invention, on entend par groupement fonctionnel d'intérêt accessible, un groupement fonctionnel suffisamment disponible, notamment en termes stériques, pour former des liaisons covalentes, ioniques ou des liaisons hydrogène avec un groupement complémentaire d'une taille comparable à la sienne. La molécule porteuse de ce groupement fonctionnel complémentaire sera nommée molécule sonde.

Par groupements complémentaires, on entend des groupements fonctionnels de la chimie organique ou organométallique pouvant réagir ou interagir les uns avec les autres pour donner des adduits suffisamment stables pour être la source d'une fixation entre les deux entités chimiques - le revêtement et la molécule sonde - qui les portent. Dans ce cadre, il peut donc s'agir de groupements électrophiles ou acides de Lewis, comme les carbonyles, les carboxyles, les isocyanates, les époxydes, les diénophiles..., aptes à réagir avec des groupements nucléophiles ou bases de Lewis comme les amines, les alcools, les thiols, les diènes et polyènes... ; de groupements donneurs de liaisons H comme les amines, les alcools, les thiols, les acides carboxyliques..., aptes à interagir avec les donneurs de doublets libres comme les amines, les alcools, les thiols, les carboxyles, les carbonyles, les liaisons insaturées riches en électrons... ; de groupements cationiques, comme les ammoniums, les antimoniums, les sulfoniums, les diazoniums..., aptes à interagir avec les groupements anioniques comme les carboxylates, les phosphates, les phosphonates, les sulfates, les sulfonates, ... On pourra trouver facilement, dans toute monographie de chimie organique, une liste plus exhaustive des paires de groupements fonctionnels complémentaires.

L'accessibilité des groupements fonctionnels d'intérêt peut être évaluée, quantitativement, en mesurant par exemple le taux de conversion de ces groupements fonctionnels (par exemple par spectroscopie, infrarouge, UV-visible, de photoélectrons...etc) lors de la mise à réaction du revêtement contenant ces groupements avec une molécule sonde contenant un groupement fonctionnel complémentaire. Si la molécule sonde est de petite taille, elle pourra en effet probablement réagir avec tous les groupements fonctionnels d'intérêt du revêtement.

Selon l'Invention, on entend par précurseurs organiques électro-actifs ne comportant pas de groupement fonctionnel d'intérêt tout groupement organique éventuellement fonctionnalisé mais incapable de former des liaisons des liaisons covalentes, ioniques ou des liaisons hydrogène avec le groupement complémentaire donné et tel que défini ci-dessus.

L'avantage d'un support comportant un revêtement ayant un grand nombre de fonctions accessibles s'exprime encore davantage lorsqu'il s'agit de fixer un objet de taille grande à très grande devant celle du groupement fonctionnel (typiquement, les objets de taille supérieure au nanomètre, et *a fortiori* supérieure à la dizaine, la centaine de nanomètres, voire au micromètre). Dans cette situation, tous les groupements d'intérêt accessibles du revêtement ne seront pas utilisés, mais ils seront en nombre suffisant pour s'accommoder au mieux aux contraintes stériques et plus généralement à la topologie de l'objet que l'on désire fixer sur ce revêtement. Généralement les précurseurs organiques sont choisis parmi :
- les monomères polymérisables et électrogreffables portant au moins un groupement fonctionnel organique d'intérêt. Le film organique électro-greffé obtenu est alors un polymère ;
- les monomères polymérisables et électrogreffables portant au moins un groupement fonctionnel permettant d'obtenir simplement, par dérivatisation, le groupement organique fonctionnel réactif d'intérêt voulu. On dit encore qu'il s'agit de monomères porteurs de synthons des groupements fonctionnels réactifs d'intérêt voulus. Le film organique électro-greffé obtenu est alors un polymère ;
- les molécules, macromolécules et objets fonctionnalisés par des monomères tels que ceux décrits ci-dessus. Le film organique obtenu n'est alors pas nécessairement de nature polymérique.

Parmi les monomères polymérisables, on peut en particulier citer les monomères vinyliques activés et les molécules clivables par attaque nucléophile, répondant respectivement aux formules (I) et (II) suivantes : 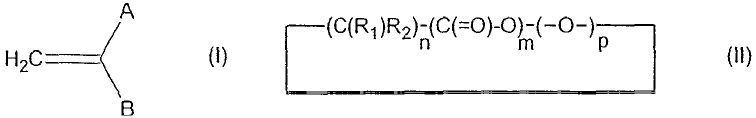 dans lesquelles :
- A, B, R₁ et R₂, identiques ou différents, représentent un atome d'hydrogène, un radical alkyle en C₁-C₄, un radical nitrile ou une fonction organique choisie parmi les fonctions hydroxyle, aminé : -NHₓ avec x = 1 ou 3, thiol, acide carboxylique, ester, amide : -C(=O)NH_{y} dans laquelle y = 1 ou 2, imide, imido-ester, aromatique et notamment pyridine, styrène ou halogéno styrène, halogénure d'acide : -C(=O)X dans laquelle X représente un atome d'halogène choisi parmi le fluor, le chlore et le brome, anhydride d'acide : -C(=O)OC(=O), nitrile, succinimide, phtalimide, isocyanate, époxyde, siloxane : -Si(OH)_{z} dans laquelle z est un nombre entier compris entre 1 et 3 inclusivement, benzoquinone, carbonyle-diimidazole, para-toluène sulfonyle, para-nitrophényl chloroformiate, éthylénique et vinylique ou un groupement organique (ou bras espaceur) portant au moins une des fonctions énumérées ci-dessus tels que les groupements comportant plusieurs fonctions vinyliques comme par exemple le penta-érythritol tetra-méthacrylique ; étant entendu que l'un au moins de A et B et que l'un au moins de R₁ et R₂ représente une desdites fonctions organiques ou un groupement organique portant au moins une desdites fonctions ;
- n, m et p, identiques ou différents, sont des nombres entiers compris entre 0 et 20 inclusivement.

Dans la notation ci-dessus, R₁ et R₂ sont des groupements qui dépendent d'un indice i non indiqué, i étant compris entre 0 et n. Ceci exprime le fait que les groupements R₁ et R₂ peuvent être en fait différents d'un (C(R₁)R₂) à l'autre dans la structure des molécules cycliques de formule (II) ci-dessus.

Parmi les monomères vinyliques activés de formule (I) ci-dessus, selon l'invention on peut notamment citer l'hydroxyéthyl-méthacrylate (HEMA), l'acrylate et le méthacrylate de glycidyle, l'acide acrylique, l'acide méthacrylique, l'aminopropyl méthacrylamide, et l'aminohexyl méthacrylamide. Parmi les molécules clivables par attaque nucléophile de formule (II) ci-dessus, on peut notamment citer des oxydes d'éthylène substitués. Selon l'Invention la surface conductrice ou semi-conductrice de l'électricité est de préférence une surface d'inox, d'acier, de fer, de cuivre, de nickel, de cobalt, de niobium, d'aluminium (notamment lorsqu'il est fraîchement brossé), d'argent, de titane, de silicium (dopé ou non), de nitrure de titane, de nitrure de tungstène, de nitrure de tantale ou une surface métallique noble choisie par les surfaces d'or, de platine, d'iridium ou de platine iridié ; les surfaces d'or étant particulièrement préférées selon l'Invention.

Sur le support conforme à l'Invention, la densité des groupements fonctionnels d'intérêt accessibles est de préférence comprise entre 10⁴/µm² et 10¹⁰/µm².

La présente Invention a également pour objet un procédé de préparation d'un support tel que décrit précédemment, caractérisé par le fait qu'il consiste à réaliser l'électrogreffage, en une seule étape, de précurseurs organiques électro-actifs sur au moins une zone d'au moins une région conductrice et/ou semi-conductrice de l'électricité à oxyde réductible sur sa surface d'un support solide, par électrolyse en milieu organique, d'une composition renfermant, dans ledit milieu organique, au moins un précurseur organique électro-actif comportant au moins un groupement fonctionnel d'intérêt, par mise en contact de ladite composition avec ladite zone, cette dernière étant soumise à un protocole de potentiel au cours duquel elle est portée, pendant tout ou partie du protocole de potentiel (voltammétrique, potentiostatique, multicréneaux, etc...), à un potentiel supérieur ou égal à un potentiel électrique seuil déterminé par rapport à une électrode de référence, ledit potentiel électrique seuil étant le potentiel au-delà duquel se produit le greffage desdits précurseurs et par le fait qu'un taux d'accessibilité en groupements fonctionnels d'intérêt d'au moins 90 % (en nombre) est obtenu :
a) en ajustant le protocole de potentiel, et notamment le nombre de balayages et la vitesse de balayage lors d'un protocole répétitif (balayages voltammétriques multicréneaux, etc...) de façon à entraîner un taux de greffage inférieur ou égal à 60 %, et/ou
b) par l'utilisation d'une composition dans laquelle les précurseurs organiques électro-actifs fonctionnalisés sont présents en mélange avec des précurseurs organiques électro-actifs ne comportant pas de groupement fonctionnel d'intérêt, ces derniers représentant alors de 0,1 % à 95 % du nombre total de précurseurs présents au sein de ladite composition, et/ou
c) par l'utilisation de précurseurs organiques électro-actifs choisis parmi ceux dans lesquels le groupement fonctionnel d'intérêt est porté à l'extrémité d'un bras espaceur.

Par ce procédé, on peut fonctionnaliser la surface avec divers groupements organiques, et réaliser un véritable "velcro® moléculaire" sur lequel on peut ensuite tirer parti directement de toutes les propriétés du polymère qui a été greffé, qu'il s'agisse de propriétés chimiques ou physiques, pour y fixer divers "objets", comme par exemple des molécules (chimiques ou biochimiques), des polymères, des cellules, ou même obtenir une fonction de collage envers un objet macroscopique, par exemple par adhésion chimique sur le polymère greffé.

Ce résultat est inattendu, étant donné que tout groupement réactif présent sur un monomère vinylique (autre que la liaison vinylique elle-même), est susceptible de faire des réactions parasites voire d'interrompre ou d'interdire la croissance des chaînes lors de l'électro-polymérisation des chaînes greffées (voir par exemple : G. Deniau, et al., J. of Electroanalytical Chem., 1998, 451, 145.

Cependant, l'idée de la présente Invention tient en ce qu'il n'est pas nécessaire d'assurer une croissance de chaînes longues sur la surface pour pouvoir bénéficier de la fixation des groupements fonctionnels d'intérêt initialement portés par les monomères vinyliques fonctionnalisés. Dans cette optique, les réactions parasites, voire les réactions de terminaison, qui peuvent apparaître du fait de la présence - sur le monomère vinylique initial - de groupements fonctionnels protiques ou réactifs par rapport à l'extrémité en croissance, non protégés, sont de peu d'importance, tant qu'elles ne consomment pas la totalité des groupements fonctionnels d'intérêt présents sur les précurseurs.

En particulier, l'électrogreffage de monomères vinyliques ou cycliques porteurs de groupements organiques d'intérêt variés permet donc d'envisager les films organiques électro-greffés comme un moyen d'obtenir en une étape, sur les surfaces conductrices et semi-conductrices, ce que l'on pouvait obtenir en deux étapes au moins en passant par la fabrication préalable d'une couche d'oxyde (par exemple en combinant fabrication d'une couche d'oxyde et fonctionnalisation chimique par un primaire d'adhésion bi-fonctionnel). Le procédé conforme à l'Invention permet la formation de liaisons covalentes entre le métal et le polymère greffé, ce qui permet d'assurer la fabrication d'une couche ayant une contribution importante à la solidité de l'interface.

Selon ce procédé, et dans le cas de la variante a), l'ajustement du protocole de potentiel permet, notamment dans le cas des polymères, d'ajuster le taux de greffage, c'est-à-dire le nombre de chaînes de polymères greffées par unité de surface : un taux de greffage modéré permettra par exemple un espacement des chaînes suffisant pour permettre le mouillage du revêtement dans son épaisseur par un solvant adéquat, ainsi que l'entrée dans le film du revêtement de molécules sondes. Selon une forme de réalisation préférée de cette variante a), le taux de greffage est ajusté à une valeur comprise entre 10 et 40 %.

Dans le cas de la variante b), les groupements fonctionnels d'intérêt sont espacés les uns des autres en effectuant l'électrogreffage à partir d'un mélange de monomères différents, dont une partie seulement porte les groupements fonctionnels d'intérêt que l'on souhaite voir présents sur le revêtement final. Les proportions relatives des différents monomères permettent alors d'ajuster le nombre de groupements fonctionnels d'intérêt, et donc leur accessibilité. Selon une forme de réalisation préférée de cette variante b), les précurseurs organiques électro-actifs ne comportant pas de groupement fonctionnel d'intérêt représentent de 0,1 à 50 % du nombre total de précurseurs présents au sein de ladite composition.

Les conditions de concentration en précurseur fonctionnalisé (monomère ou autre) sont variables d'un précurseur à l'autre. On pourra cependant considérer comme préférentielles les concentrations comprises entre 0,1 et 10 mol/l, et en particulier entre 0,1 et 5 mol/l en ce qui concerne les précurseurs organiques électro-actifs comportant un groupement fonctionnel d'intérêt. Lorsque des précurseurs organiques électro-actifs ne comportant pas de groupement fonctionnel d'intérêt sont présents au sein de la composition organique (variante b)), ceux-ci sont alors présents à une concentration de préférence comprise entre 10⁻³ et 18 mol/l et encore plus préférentiellement entre 10⁻³ et 9 mol/l.

Selon la variante c), on peut également améliorer l'accessibilité des groupements fonctionnels d'intérêt en les plaçant à l'extrémité d'un bras espaceur, qui peut être par exemple une chaîne de quelques atomes de carbone. Ce bras espaceur aura pu être présent directement sur les précurseurs du revêtement électro-greffé, ou bien rajouté *a posteriori.* Ces bras espaceurs trouvent notamment leur utilité lorsque l'objet à fixer sur le revêtement est de taille importante : la fixation d'un bras espaceur sur un revêtement électro-greffé est plus facile que celle d'un objet de taille importante, car la molécule (sonde) qui contient le bras espaceur est en général plus petite que l'objet. Elle peut donc se fixer sur la quasi-totalité des groupements fonctionnels d'intérêt accessibles du revêtement électro-greffé, et les remplacer par des groupements encore plus accessibles.

Selon ce procédé, l'électrolyse est de préférence réalisée par polarisation en conditions voltammétriques.

Le milieu organique mis en oeuvre au cours de ce procédé est de préférence choisi parmi la diméthylformamide, l'acétate d'éthyle, l'acétonitrile et le tétrahydrofurane.

Ce milieu organique peut en outre renfermer au moins un électrolyte support pouvant notamment être choisi parmi les sels d'ammoniums quaternaires tels que les perchlorates, les tosylates, les tetrafluoroborates, les hexafluorophosphates, les halogénures d'ammoniums quaternaires, le nitrate de sodium et le chlorure de sodium.

Parmi ces sels d'ammoniums quaternaires on peut en particulier citer à titre d'exemple le perchlorate de tetraéthylammonium (TEAP), le perchlorate de tetrabutylammonium (TBAP), le perchlorate de tetrapropylammonium (TPAP), le perchlorate de benzyltriméthylammonium (BTMAP).

On obtient par exemple un film de poly-méthacryloyl-succinimide sur or en réalisant 10 balayages voltammétriques de - 0,4 à -2,8 V/(Ag+/Ag) à 50 mV/s sur une surface d'or plongée dans une solution à 0,5 mol/l de méthacryloyl-succinimide dans la DMF, en présence de 5.10⁻² mol/l de TEAP. Les fonctions succinimide sont détectées en spectroscopie infrarouge en réflexion/absorption (IRRAS) sur le film obtenu, après un rinçage de 5 minutes sous ultrasons. Comme il est détaillé ensuite dans les exemples de réalisation, ce film greffé permet facilement l'accrochage de poly-allyl-amine, par réaction des groupements amine de la poly-allyl-amine avec les groupements succinimide du poly-méthacryloyl-succinimide électro-greffé.

On observe par ailleurs qu'un film de poly-méthacryloyl-succinimide peut également être obtenu à 0,18 mol/l dans l'acétonitrile, aussi bien sur or que sur platine.

De façon alternative, on observe la formation d'un film électro-greffé de poly-hydroxyéthyl méthacrylate (PHEMA) sur or en réalisant 10 balayages voltammétriques de + 1,0 à - 3,0 V/(Ag+/Ag) à 50 mV/s sur une surface d'or plongée dans une solution à 0,4 mol/l d'hydroxyéthyl méthacrylate dans la DMF, en présence de 5.10-² mol/l de TEAP (Tétra Ethyl Ammonium Perchlorate). On pourra remarquer que ce film est obtenu avec un monomère porteur de groupements hydroxyle non protégés, alors que l'art antérieur mentionnait qu'il fallait protéger ces groupements hydroxyle pour réaliser l'électrogreffage du HEMA (voir notamment la demande de brevet EP-A-0 665 275). Comme il est détaillé dans les exemples de réalisation, ce film de PHEMA électro-greffé réagit facilement avec des groupements diisocyanate, pour obtenir une post-fonctionnalisation de la surface, ce qui montre que la croissance des chaînes, pourtant gênée par la présence du groupement protique, n'est pas nécessaire pour obtenir des revêtements électro-greffés pouvant servir de "velcro® moléculaire".

L'Invention a enfin pour objet l'utilisation du support conforme à l'Invention à titre de primaire d'adhésion ("velcro® moléculaire") pour la fixation de molécules d'intérêt (molécules sondes) ou d'objets porteurs d'une fonction complémentaire.

Selon une première forme de réalisation avantageuse de cette utilisation, le support conforme à l'Invention peut être utilisé pour la fixation de protéines (avidine, anti-corps, facteurs de croissance...). Les applications potentielles concernent par exemple la réalisation de surfaces bio-actives (angioplastie, prothèses bio-actives...) favorisant l'adhésion cellulaire et éventuellement la recolonisation ; la réalisation de surfaces pouvant servir au tri cellulaire sélectif (par fixation d'anti-corps spécifiques de la paroi d'une cellule donnée) ; la réalisation de matrices de puces à protéines basées sur un support à plots conducteurs.

Selon une deuxième forme de réalisation avantageuse de cette utilisation, le support conforme à l'Invention peut également être utilisé pour la fixation de molécules d'acide nucléique telles que des molécules d'ADN, d'ARN ou d'oligonucléotides, par exemple pour la réalisation de surfaces bio-actives (oligo-nucléotides anti-sens), ou de plots d'accrochage pour les puces à analyse chimique ou biochimique, comme par exemple les puces à acide nucléique telles que les puces à ADN.

Selon une troisième forme de réalisation avantageuse de cette utilisation, le support conforme à l'Invention peut également être utilisé une pour la fixation d'oligo-saccharides, et plus généralement de biomatériaux (polymères biocompatibles tels que des polysaccharides comme par exemple les dextranes, céramiques... etc) par exemple pour la réalisation de surfaces biocompatibles ou à propriétés encapsulantes.

Enfin, selon une quatrième forme de réalisation avantageuse de cette utilisation, le support conforme à l'Invention peut également être utilisé pour réaliser le collage d'objets sur des surfaces conductrices ou semi-conductrices par réactions chimiques de surface.

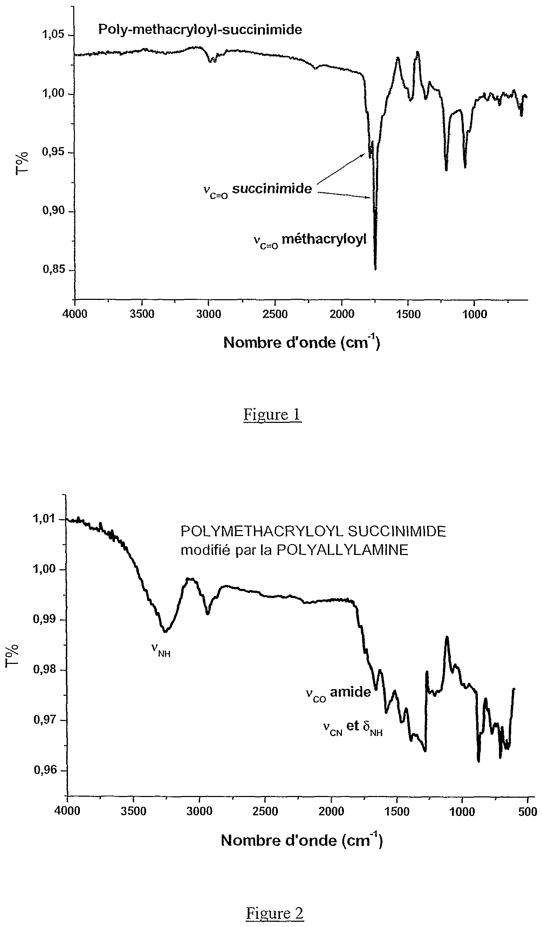

Outre les dispositions qui précèdent, l'Invention comprend encore d'autres dispositions qui ressortiront de la description qui va suivre, qui se réfère à des exemples de préparations de supports conformes à l'Invention comportant une surface recouverte d'un film de poly-méthacryloyl-succinimide, de poly-hydroxyéthylméthacrylate ou de polyméthacrylonitrile (PMAN), un exemple illustrant l'utilisation d'un support recouvert d'un film de poly-méthacryloyl-succinimide électrogreffé à titre de primaire d'adhésion pour la fixation de poly-allyl-amine, à un exemple illustrant l'utilisation d'un support recouvert par un film de poly-hydroxyéthylméthacrylate à titre de primaire d'adhésion pour la formation d'un carbamate, à des exemples illustrant l'utilisation d'un support comportant un film de polyméthacrylonitrile à titre de primaire d'adhésion pour la fixation de diverses molécules ou macromolécules, ainsi qu'aux figures 1 à 16 annexées dans lesquelles :
- la figure 1 représente le spectre IRRAS d'une surface d'or recouverte d'un film de poly-méthacryloyl-succinimide électrogreffé ;
- la figure 2 représente le spectre IRRAS d'une surface d'or recouverte d'un film de poly-méthacryloyl-succinimide, post-fonctionnalisé par de la poly-allyl-amine ;
- la figure 3 représente le spectre IRRAS d'une surface d'or recouverte d'un film de poly-hydroxyéthylméthacrylate ;
- la figure 4 représente le spectre IRRAS d'une surface d'or recouverte d'un film de poly-hydroxyéthylméthacrylate après réaction avec le diisocyanatohexane et formation d'un carbamate ;
- la figure 5 représente les spectres IRRAS d'une surface d'or recouverte d'un film de PMAN électrogreffé (spectre du haut), après réduction des groupements nitriles en amines (spectre du milieu) et après réaction de ces groupements amine avec l'anhydride trifluoroacétique pour former un amide (spectre du bas) ;
- la figure 6 représente les spectres IRRAS d'une surface d'or recouverte d'un film de PMAN électrogreffé (CN), après réduction des groupements nitriles en amines par l'alumino-hydrure de lithium (CH₂NH₂), après réaction de ces groupements amines avec le 1,6-diisocyanatohexane pour former l'urée (CH₂NHCONH(CH₂)₆NCO), et après réaction sur le trifluoroéthanol pour former le carbamate (CH₂NHCONH(CH₂)₆NHCOOCH₂CF₃) ;
- la figure 7 représente les spectres IRRAS d'une surface d'or recouverte d'un film de PMAN électrogreffé (CN), après réduction des groupements nitriles en amines par l'alumino-hydrure de lithium (CH₂NH₂), après réaction de ces groupements amines avec le 1,6-diisocyanatohexane pour former l'urée (CH₂NHCONH(CH₂)₆NCO), et après réaction sur l'hydroxyéthyl cellulose pour former le carbamate correspondant ;
- la figure 8 représente les spectres IRRAS d'une surface d'or recouverte d'un film de PMAN électrogreffé sur lequel on a greffé de l'hydroxyéthyl cellulose et celui d'une pastille de KBr renfermant de l'hydroxyéthyl cellulose ;
- la figure 9 représente les spectres IRRAS d'une surface d'or recouverte d'un film de PMAN électrogreffé après hydrolyse des groupements nitrile e amide (traitement acide), puis en acide carboxylique (traitement basique) ;
- la figure 10 représente les spectres IRRAS d'une surface d'or recouverte d'un film de PMAN électrogreffé sur lequel on a greffé de l'avidine ;
- la figure 11 représente la région P₂ₚ du spectre réalisé en spectroscopie de photoélectrons X (XPS) d'une surface d'or recouverte d'un film de PMAN électrogreffé (a) ; après fixation d'avidine (b) et après fixation d'avidine et d'un oligonucléotide biotinylé à son extrémité 5' ;
- la figure 12 représente les spectres IRRAS d'une surface d'or recouverte d'un film de PMAN électrogreffé (a), sur lequel a été fixé un anti-corps anti-IgG de lapin (b), traitée par une solution d'antigène spécifique (c) ;
- la figure 13 représente les spectres IRRAS d'une surface d'or recouverte d'un film de PMAN électrogreffé (a), sur lequel les groupements nitriles ont été réduits (b), traités par l'anhydride glutarique pour former des amides (c), puis par l'anhydride trifluoroacétique (d) ;
- la figure 14 représente les spectres IRRAS de la figure 13 (d), après réaction avec un oligonucléotide simple brin aminé en position 5', puis avec un second oligonucléotide complémentaire du premier ;
- la figure 15 représente la région P₂ₚ du spectre XPS du film de la figure 13 (d) après réaction avec un oligonucléotide simple brin aminé en position 5', puis avec un second oligonucléotide complémentaire du premier ; et
- la figure 16 représente le spectre IRRAS d'un film de dextrane fonctionnalisé par des groupements glycidyl-méthacrylate électrogreffé (spectre haut) et le spectre du dextrane fonctionnalisé par des groupements glycidyl-méthacrylate avant électrogreffage (spectre bas).

Les exemples 1 et 3-11 sont des exemples de référence.

### EXEMPLE 1 : FIXATION DE POLY-ALLYL-AMINE PAR L'INTERMÉDIAIRE D'UN FILM DE POLY-METHACRYLOYL-SUCCINIMIDE ELECTRO-GREFFE

Cet exemple illustre à la fois l'électro-greffage d'un monomère porteur d'un groupement fonctionnel d'intérêt pouvant entrer dans la fonctionnalisation par une molécule organique (groupement succinimide, électrophile), et la réaction de post-fonctionnalisation elle-même, *via* la réaction d'amines (nucléophiles) sur les groupements succinimide du polymère électro-greffé. La sonde porteuse des groupements amine est un polymère, la poly-allyl-amine, et la réaction de post-fonctionnalisation est donc une réaction polymère-sur-polymère, ce qui illustre la grande accessibilité des groupements succinimide du revêtement électro-greffé.

### a) Formation d'un film de poly-méthacryloyl-succinimide électro-greffé

On réalise 10 balayages voltamétriques de - 0,3 à - 2,5 V (Ag⁺/Ag) à 50 mV/s sur une surface d'or plongée dans une solution à 0,18 ; 0,25 ou 0,5mol/l de méthacryloyl-succinimide (MASU) dans la DMF, en présence de 5.10⁻² mol/l de TEAP. On obtient un film de poly-méthacryloyl-succinimide, comme le prouve le spectre IRRAS de la surface représenté sur la figure 1 annexée qui présente les bandes carbonyle caractéristiques à 1782 et 1746 cm⁻¹ (transmittance en % en fonction de la longueur d'ondes en cm⁻¹).

Ce spectre IRRAS a été réalisé après rinçage à l'acétone pendant 5 minutes sous ultrasons.

Le tableau 1 ci-après résume les caractéristiques IRRAS (intensité de la bande C=O des groupements succinimide) en fonction des conditions de synthèse.

Dans ce tableau VC indique un balayage en conditions voltamétriques ; les bornes de potentiel indiquées sont repérées par rapport à une électrode d'argent.

**TABLEAU I**

| **Milieu électrochimique TEAP/DMF** | **Conditions de synthèse type du film** | **Caractér. IRRAS % C=O** |
|---|---|---|
| **MASU 0.18M** | 5*1 VC, 50mV/s de -0.6 à -2.8 | 7.78 |
| **MASU 0.18M** | 5VC, 50mV/s de -0.6 à -2.8 | 7.13 |
| **MASU 0.25M** | 10VC, 50mV/s de -0.3 à -2.5 | 17.2 |
| **MASU 0.5M** | 10VC, 50mV/s de -0.6 à -2.5 | 45 |
| **MASU 0.5M** | 10VC, 50mV/s de -0.4 à -2.8 | 55 |

### b) Réaction de post-fonctionnalisation : fixation de la poly-allyl-amine

Dans un tube rôdé muni d'un agitateur magnétique, on introduit 20 ml d'eau désionisée, puis 0,5 ml d'une solution de poly-allyl-amine à 20 % en poids dans l'eau désionisée. On introduit ensuite la lame d'or portant un film de poly-méthacryloyl-succinimide électro-greffé, obtenu selon le protocole ci-dessus. La lame est laissée, sous agitation, pendant 1 heure et 30 min à température ambiante.

Elle est ensuite sortie du tube, rincée à l'eau désionisée par jets, puis aux ultrasons dans l'eau désionisée pendant 2 minutes, et enfin séchée par soufflage d'azote.

On observe par IRRAS (figure 2) la diminution des bandes caractéristiques des groupements succinimide à 1746 et 1782 cm⁻¹ , et l'apparition des bandes caractéristiques de la poly-allyl-amine, et notamment la bande amide v_{CO} à 1656 cm⁻¹, les bandes d'élongation ν_{CN} et de déformation δ_{NH} à 1574 cm⁻¹, et la bande d'élongation ν_{NH} à 3254 cm⁻¹.

### EXEMPLE 2: FORMATION D'UN CARBAMATE PAR RÉACTION DU DIISOCYANATOHEXANE SUR LES GROUPEMENTS HYDROXYLES D'UN FILM DE POLY-HYDROXYETHYLMÉTHACRYLATE (PHEMA) ÉLECTRO-GREFFÉ.

Cet exemple illustre l'électrogreffage d'un monomère porteur de groupements hydroxyle (le HEMA), et la formation d'un film de PHEMA, ainsi que l'utilisation des groupements hydroxyle du PHEMA pour réagir avec les groupements isocyanate du diisocyanatohexane pour former un carbamate. Il illustre également la grande accessibilité des groupements hydroxyle du polymère électro-greffé vis-à-vis de la molécule sonde que constitue le diisocyanatohexane, puisque la totalité des groupements est convertie lors de la réaction.

### a) Formation d'un film de PHEMA

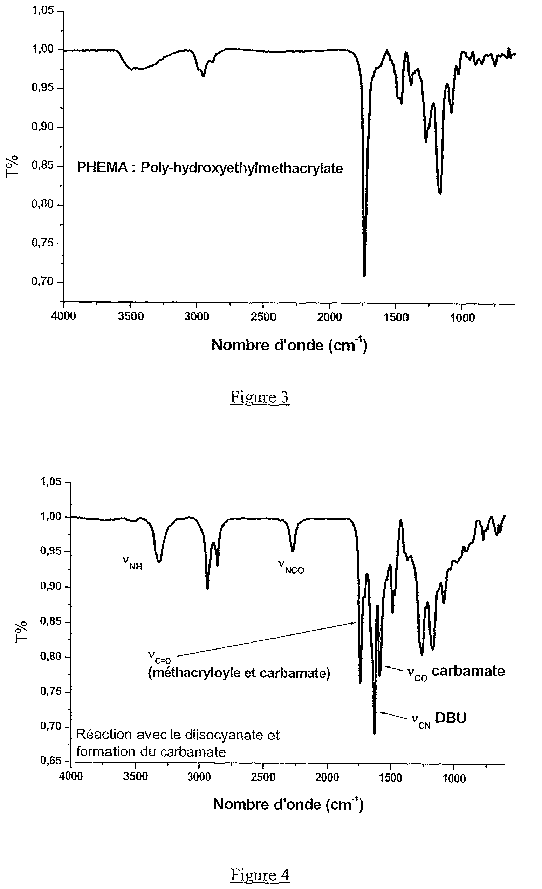

On réalise un film de PHEMA sur or par 10 balayages voltammétriques à 50 mV/s de -2,4 à +1 V (Ag⁺/Ag) sur une surface d'or plongée dans une solution d'hydroxyéthyl-méthacrylate (HEMA) à 2,7 mol/l dans la DMF, en présence de 5.10⁻² mol/l de TEAP. Le spectre IRRAS du film obtenu est présenté sur la Figure 3. On constate la présence de la bande carbonyle caractéristique à 1737 cm⁻¹. On observe également une bande vers 3500 cm⁻¹ due aux groupements hydroxyle des bras hydroxyéthyle du polymère.

### b) Réaction de post-fonctionnalisation : fixation du diisocyanatohexane

Dans un tube rôdé sec, on introduit 30 ml de toluène séché sur tamis moléculaires 4 Å, 1,5 ml de diisocyanatohexane à 5 % en volume dans du toluène et 2 gouttes de 1,8-diazabicyclo [5,4,0] undec-7-ène (DBU).

On introduit ensuite la lame d'or recouverte d'un film de PHEMA électro-greffé obtenue ci-dessus à l'étape précédente, préalablement trempée dans et recouverte d'une couche de toluène sec.

Le tube est fermé, puis laissé à réagir à température ambiante sous argon pendant 142 heures. La lame est sortie, rincée au toluène sec puis à l'acétone sèche par jets. Elle est ensuite séchée à l'azote.

Le spectre IRRAS de la lame réalisé après réaction avec le diisocyanatohexane et formation du carbamate est représenté sur la Figure 4.

On observe l'apparition des bandes d'élongation ν_{NH} à 3330 cm⁻¹, de la bande isocyanate N=C=O à 2264 cm⁻¹. La bande à 1623 cm⁻¹ est probablement due à la présence DBU résiduel. On observe également la disparition de la bande vers 3500 cm⁻¹ due aux groupements hydroxyle, ce qui montre que la conversion de ces groupements a été quantitative, et qu'ils étaient donc tous accessibles pour la molécule sonde.

### EXEMPLE 3 : OBTENTION DE GROUPEMENTS AMINE SUR UNE LAME D'OR PAR RÉDUCTION DES NITRILES D'UN FILM DE POLYMÉTHACRYLONITRILE ÉLECTRO-GREFFÉ.

Cet exemple illustre l'utilisation des groupements nitrile d'un film de poly-méthacrylonitrile (PMAN) comme précurseurs de groupements amine, et la réactivité de ces groupements amine par formation d'amides avec l'anhydride trifluoroacétique. Ici encore, la réaction de fonctionnalisation est quantitative, ce qui montre que les groupements nitrile, puis amine, sont très accessibles.

### a) Préparation d'une lame d'or recouverte d'un film de PMAN électrogreffé

On réalise un film de PMAN sur or en effectuant 10 balayages voltammétriques de - 0,5 à - 2,7 V/(Ag⁺/Ag) à 50 mV/s sur une surface d'or plongée dans une solution à 2,5 mol/l de méthacrylonitrile dans la DMF, en présence de 5.10⁻² mol/l de TEAP. On identifie les groupements nitrile du polymère formé par la bande à 2235 cm⁻¹ en IRRAS.

### b) Réaction de post-fonctionnalisation : formation d'amides avec l'anhydride trifluoroacétique

Dans un tube équipé d'un septum, on introduit la lame recouverte du film de PMAN obtenue ci-dessus à l'étape a), soufflée à l'azote. On ferme le septum, puis on introduit sous argon, à l'aide d'une seringue purgée, 20 ml de pyridine séchée sur tamis moléculaire, et 1 ml d'une solution d'alumino-hydrure de lithium LiAlH₄ à 1 mol/l dans du tetrahydrofuranne (THF) séché sur tamis moléculaire. On laisse la lame dans le milieu réactionnel pendant 2 minutes à 70°C. La lame est ensuite rincée à la pyridine par trempage pendant 5 minutes, puis à l'eau désionisée par jets, séchée par soufflage d'azote, traitée aux ultrasons pendant 1 minute dans une solution de soude à 1 mol/l, rincée à l'eau désionisée puis séchée par soufflage d'azote.

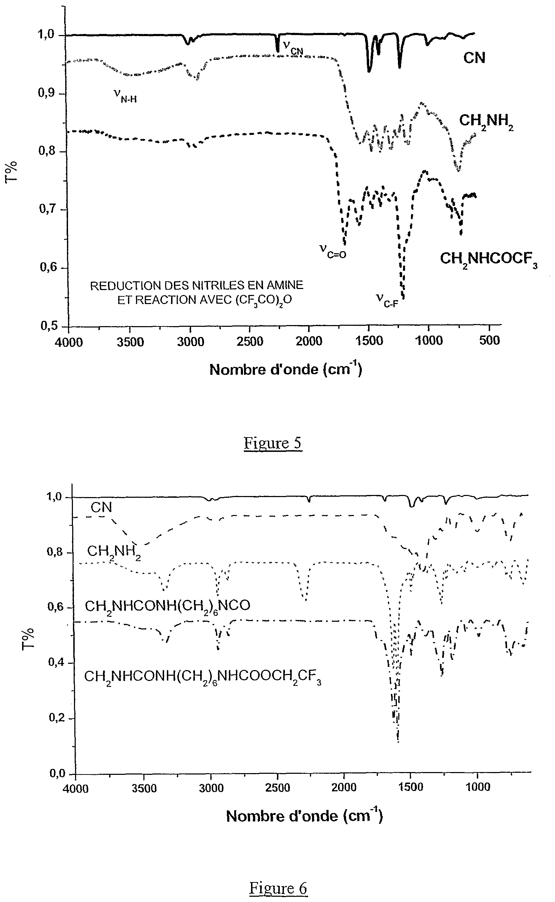

La Figure 5 annexée représente les spectres IRRAS de la lame d'or recouverte d'un film de PMAN électro-greffé (haut), après réduction des groupements nitrile en amine par l'alumino-hydrure de lithium (milieu), et après réaction de ces groupements amine avec l'anhydride trifluoroacétique pour former l'amide (bas).

On observe, la disparition de la bande d'élongation des nitriles à 2235 cm⁻¹, et l'apparition de la bande d'élongation ν_{NH} des groupements NH₂ entre 3250 et 3450 cm⁻¹, la bande d'élongation asymétrique des CH₂(NH₂) à 2929 cm⁻¹, et la bande de déformation des NH₂ à 1642 cm⁻¹, caractéristiques de la formation de poly-allyl-amine.

### EXEMPLE N°4 : RÉACTIVITÉ DES GROUPEMENTS AMINES FORMÉS SELON LE MODE DE RÉALISATION DE L'EXEMPLE N°3.

Cet exemple a pour but de vérifier que les groupements amine qui ont été fabriqués ci-dessus à l'exemple 3 sont accessibles et conservent leur réactivité. Ceci est réalisé par amidation des fonctions amine, selon le mode opératoire décrit dans J. Org. Chem., 1989, 54, 2498, et réadapté dans le cas présent pour une réaction sur une surface d'or.

Dans un tube, on réalise 20 ml d'une solution à 0,35 mol/l d'anhydride trifluoroacétique dans le THF. On trempe la lame obtenue à l'issue de l'exemple 3 pendant 2 minutes à température ambiante sous argon (septum). La lame est sortie, rincée au THF sec puis séchée par soufflage d'azote.

Le revêtement obtenu est analysé par IRRAS (non représenté), et est bien caractéristique de la formation de groupements amide à partir des aminés : on observe l'apparition de la bande amide à 1694 cm⁻¹, la bande d'allongement CN et de déformation N-H à 1572 cm⁻¹, la bande d'élongation C-F à 1209 cm⁻¹ avec, vers 1250 cm⁻¹, la bande de déformation CNH. Dans le même temps, on observe la disparition quasi totale de la bande d'élongation des amines vers 2929 cm⁻¹.

### EXEMPLE 5 : RÉACTIVITÉ DES GROUPEMENTS AMINES FORMES A L'EXEMPLE 3; RÉACTION AVEC LE 1,6-DIISOCYANATOHEXANE, FORMATION DE L'URÉE.

On illustre dans cet exemple la réaction des groupements amine formés dans l'exemple n°3 avec un agent de couplage bi-fonctionnel, pour former une urée. L'urée formée en surface est mise à profit pour y fixer un alcool. Le mode opératoire de synthèse de l'urée en surface est adapté de Org. Synth., 1988, VI, 951.

Dans un tube, on introduit 30 ml d'une solution à 5 % en volume de 1,6-diisocyanatohexane (ONC-(CH₂)₆-NCO) dans le toluène sec (séché sur tamis moléculaires 4 Å). On introduit une lame d'or portant un film électro-greffé contenant des groupements amine, et telle qu'obtenue à partir de l'exemple n°3, recouverte d'une couche de toluène sec. La lame est laissée à réagir pendant 22 heures à température ambiante sous agitation magnétique, sous argon. Elle est sortie du tube, rincée par jets de toluène sec, puis séchée par soufflage d'azote.

Le film obtenu est en effet mis à réagir avec le trifluoroéthanol selon le protocole suivant : dans un tube, on introduit 30 ml de toluène sec (tamis moléculaire 4 Å), 1,5 ml de trifluoroéthanol, et 3 gouttes de DBU. On y place la lame portant le film électro-greffé modifié par le 1,6-diisocyanatohexane, recouverte d'une couche de toluène sec. La lame est laissée au contact de la solution, sous argon et sous agitation magnétique, pendant 88 heures à température ambiante. La lame est sortie, rincée au toluène sec, puis à l'acétone, à l'eau désionisée, et enfin à l'acétone par jets, et séchée par soufflage d'azote.

La figure 6 annexée montre les spectres IRRAS de la lame d'or recouverte d'un film de PMAN électro-greffé (CN), après réduction des groupements nitrile en amine par l'alumino-hydrure de lithium (CH₂NH₂), après réaction de ces groupements amine avec le 1,6-diisocyanatohexane pour former l'urée (CH₂NHCONH(CH₂)₆NCO), et après réaction sur le trifluoroéthanol pour former le carbamate (CH₂NHCONH(CH₂)₆NHCOOCH₂CF₃).

On observe les bandes d'allongement ν_{N-H} à 3330 cm⁻¹, la bande d'élongation O=C=N à 2271 cm⁻¹, ainsi que les bandes urée à 1633 et 1576 cm⁻¹, preuves de la réaction des groupements amine initiaux avec au moins un des deux groupements isocyanate du 1,6-diisocyanatohexane. La bande O=C=N montre, de plus, qu'une partie des sites isocyanates reste disponible, ce qui est prouvé par l'utilisation de ces groupements pour réagir avec un alcool.

Après réaction sur le trifluoroéthanol pour former le carbamate (CH₂NHCONH(CH₂)₆NHCOOCH₂CF₃, le spectre IRRAS de la lame obtenue montre également la bande C=O du carbamate à 1722 et à 1590 cm⁻¹ (confondue avec celle de l'urée), la bande CH₂O (CF₃CH₂O-) à 1256 cm⁻¹, et les bandes d'élongation des liaisons C-F à 1179 cm⁻¹. On note également la disparition de la bande NCO à 2271 cm⁻¹.

Ici encore, la conversion des groupements fonctionnels successivement réalisés sur le revêtement est quantitative, ce qui montre leur grande accessibilité.

### EXEMPLE 6 : UTILISATION DES GROUPEMENTS FONCTIONNELS D'UN FILM DE POLYMÈRE ÉLECTRO-GREFFÉ POUR FIXER DE L'HYDROXYÉTHYL CELLULOSE.

On illustre ici le fait que l'urée formée dans l'exemple 5 ci-dessus permet également la fixation d'hydroxyéthyl cellulose, et plus généralement des polysaccharides. Cette voie illustre la réaction d'une macromolécule de structure tridimensionnelle complexe, dont l'accrochage est rendu possible par la grande accessibilité des groupements fonctionnels d'intérêt sur le revêtement électro-greffé. Elle est intéressante car elle permet la fixation de polymères ou de macromolécules qui sont difficiles à fixer sur des surfaces conductrices de l'électricité, et en particulier sur les métaux, et dont l'intérêt est d'ouvrir la route vers la réalisation de surface biomimétiques (héparine, dextranes modifiés, acide hyaluronique, etc...) sur métaux, et de module de fixation de molécules d'intérêt biologique complexes (ADN, protéines, facteurs de croissance...etc).

On réalise une lame d'or recouverte d'un film électro-greffé modifié par du 1,6-diisocyanatohexane et porteuse de groupements isocyanate libres, comme décrit dans l'exemple 5 ci-dessus.

Dans un tube, on introduit 30 ml de DMF séchée sur tamis moléculaire 4 Å. La solution est dégazée par barbotage d'argon pendant 10 minutes. On introduit ensuite 0,6 g d'hydroxyéthyl cellulose, et on chauffe la solution à 60°C pour obtenir la dissolution, sous agitation magnétique pendant 15 minutes. On ajoute ensuite 5 gouttes de DBU, puis on introduit la lame porteuse de groupements isocyanate, recouverte de sa solution de synthèse (toluène et 1,6-diisocyanatohexane en excès). La lame est laissée à réagir pendant 46 heures à 50°C sous argon et avec agitation magnétique. La lame est sortie et rincée pendant une heure dans l'eau désionisée sous agitation magnétique.

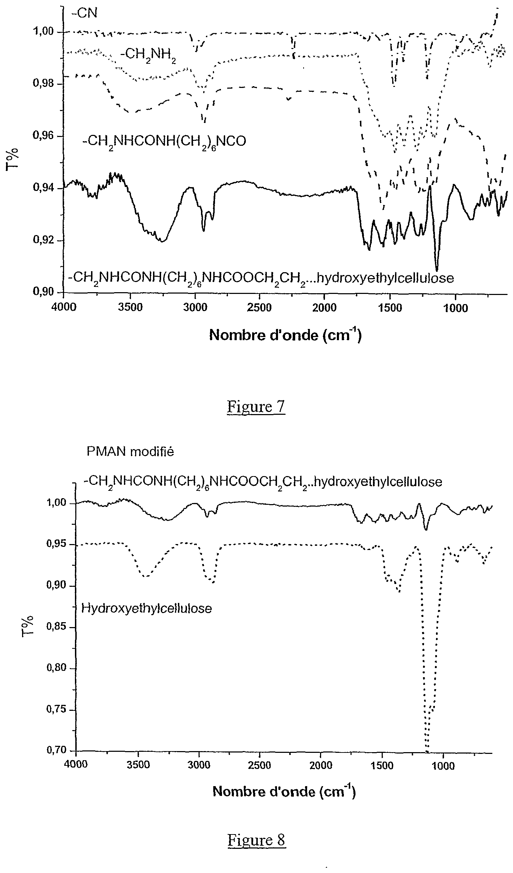

Les spectres IRRAS du support ainsi obtenu est représenté sur la Figure 7 annexée. Sur cette figure, on peut voir le spectre d'une lame d'or recouverte d'un film de PMAN électro-greffé (CN), celui de la lame après réduction des groupements nitrile en amine par l'alumino-hydrure de lithium (CH₂NH₂), puis après réaction de ces groupements amine avec le 1,6-diisocyanatohexane pour former l'urée (CH₂NHCONH(CH₂)₆NCO), et enfin après réaction sur l'hydroxyéthyl cellulose pour former le carbamate (CH₂NHCONH(CH₂)₆NHCOOCH₂CH₂ hydroxyéthylcellulose). On observe la bande carbamate secondaire à 1715 cm⁻¹, ainsi que les bandes caractéristiques de l'hydroxyéthyl cellulose entre 1200 et 1000 cm⁻¹, qui correspondent aux bandes d'élongation des groupements éther (COC) et alcool (OH).

La Figure 8 montre, pour comparaison, le spectre du film obtenu avec la lame d'or conforme à l'Invention et celui d'une pastille de KBr contenant de l'hydroxyéthyl cellulose. Ce spectre confirme la fixation de l'hydroxyéthylcellulose sur le support de l'Invention.

### EXEMPLE 7: FILM DE PMAN ÉLECTROGREFFÉ PRÉCURSEUR DE GROUPEMENTS AMIDES ET ACIDE CARBOXYLIQUE SUR DES SURFACES CONDUCTRICES ET SEMI-CONDUCTRICES.

On illustre ici le fait que l'on peut utiliser un film de PMAN tel que celui obtenu ci-dessus à l'exemple 3 comme précurseur simple de groupements amide et acide carboxylique sur des surfaces métalliques. Cette transformation présente l'avantage d'aboutir facilement à la formation de groupements réactifs différents du film de départ, mais aussi de permettre la réalisation simple de surfaces hydrophiles à partir de films électro-greffés hydrophobes (ce qui facilite notamment l'utilisation des films comme primaires d'adhésion de composés hydrophiles, et peut être utile dans la fabrication de revêtements mieux admis dans les applications biomédicales).

Les fonctions nitrile ont été modifiées en fonctions acide carboxylique en deux étapes :
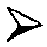 Une étape acide :

   R-CN + H₂SO₄ → R-CONH₂
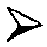 Une étape basique :

   R-CONH₂ + NaOH → R-COOH

Suivant le temps de réaction, on peut avoir de quelques % à 100 % de transformation. Ces traitements s'accompagnent d'une perte d'épaisseur importante. Après le traitement acide, la zone traitée est hydrophile. L'eau mouille bien la partie modifiée et forme "une couche" sur la surface.

Les deux réactions sont effectuées à l'atmosphère, à 100°C (température interne) dans des Bechers ou flacons ouverts. Après chaque traitement, les lames sont rincées par trempage de 5 minutes dans l'eau puis séchées par soufflage à l'azote.

Les solutions utilisées sont les suivantes :
- Solution acide :
   21 ml de H₂SO₄ à 95% minimum
   3,5 g de NaHSO₄ : solution à environ 37 N ;
- Solution basique :
   18 g de NaOH / 25 ml H₂O : solution à 18 N.

Un traitement partiel est obtenu en trempant la lame dans le milieu acide pendant un temps égal ou inférieur à 5 secondes et en la trempant pendant 5 à 10 secondes dans le milieu basique. Un traitement de 30 secondes dans les 2 milieux conduit à la disparition totale des fonctions nitrile, ce qui correspond à leur conversion complète.

Une analyse IRRAS est effectuée avant et après chaque étape : lame d'or recouverte du film de PMAN électro-greffé avant et après hydrolyse des groupements nitrile en amide (traitement acide) puis après conversion en fonctions acide carboxylique (traitement basique).

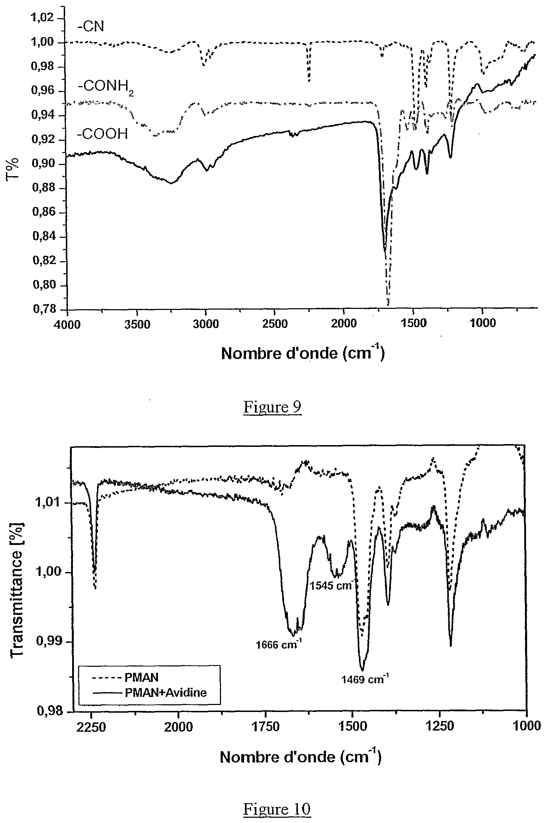

Les spectres IRRAS obtenus sont représentés sur la figure 9 annexée.

L'analyse de ces spectres révèle, pour le traitement acide, la formation de bandes amide à 1680 cm⁻¹ (élongation C=O), et des bandes de déformation des groupements NH₂ à 1605 cm⁻¹. Après traitement basique, on remarque le décalage de la bande carbonyle vers 1700 cm⁻¹, ce qui correspond à des groupements acide carboxylique, probablement dimérisés.

### EXEMPLE 8: FIXATION DE L'AVIDINE SUR UN FILM DE PMAN ÉLECTRO-GREFFÉ

On illustre ici que les groupements nitriles d'un film de PMAN électrogreffé peuvent être utilisés pour la fixation covalente de protéines. On sait en effet que les nitriles peuvent réagir avec les alcools, pour donner des imino-ethers (synthèse de Pinner, cf. : P.L. Compagnon, M. Miocque, Annales de Chimie, 1970, 5, 23), selon la réaction suivante :

R-CN + R'-OH → R-C(OR')=NH

Le même type de réaction est également connu pour les amines et les thiols. Comme dans l'exemple 6 ci-dessus, on parvient à réaliser la fixation d'une macromolécule de structure tridimensionnelle complexe, ce qui n'est possible que du fait de la grande accessibilité des fonctions nitrile du polymère électro-greffé. Dans l'exemple suivant, on illustre que cette accessibilité est telle qu'elle permet même la fixation de la protéine dans une conformation où elle conserve son activité, par réaction avec une molécule porteuse d'un fragment biotine ayant une très grande affinité pour l'avidine.

Dans un tube équipé d'un septum, on introduit 30 ml d'une solution à 2 mg/l d'avidine dans un tampon phosphate salin (PBS) de pH 7,2. On place une lame d'or recouverte d'un film de PMAN électro-greffé tel que préparée ci-dessus à l'exemple 3. La lame est laissée à réagir pendant 15 heures à une température de 4°C. Elle est ensuite sortie et rincée à l'eau désionisée.

Le spectre IRRAS de la lame ainsi obtenu est représenté sur la figure 10 annexée.

L'analyse de ce spectre montre la présence des bandes amide I (1666 cm⁻¹) et II (1545 cm⁻¹), ainsi que les bandes du squelette (1469 cm⁻¹) caractéristiques de la protéine.

### EXEMPLE 9 : VÉRIFICATION DE L'ACTIVITÉ DE L'AVIDINE FIXÉE SUR UN FILM DE PMAN ÉLECTRO-GREFFÉ.

On illustre dans cet exemple que l'avidine fixée selon le protocole de l'exemple 8 est active, en l'utilisant comme point de fixation d'un oligonucléotide (ODN) biotinylé. L'ODN utilisé est le 15-mer suivant :

Biotine - 5' - GCTTGCTGAAGTTCG - 3' (Biotine - SEQ ID N°1)

Dans un tube, on plonge la lame obtenue selon le procédé de l'exemple 8 dans une solution à 25 µM de cet ODN dans un tampon PBS (pH 7,2). La lame est mise à réagir à température ambiante pendant 15 heures, sortie et rincée par jets à plusieurs reprises à l'eau désionisée.

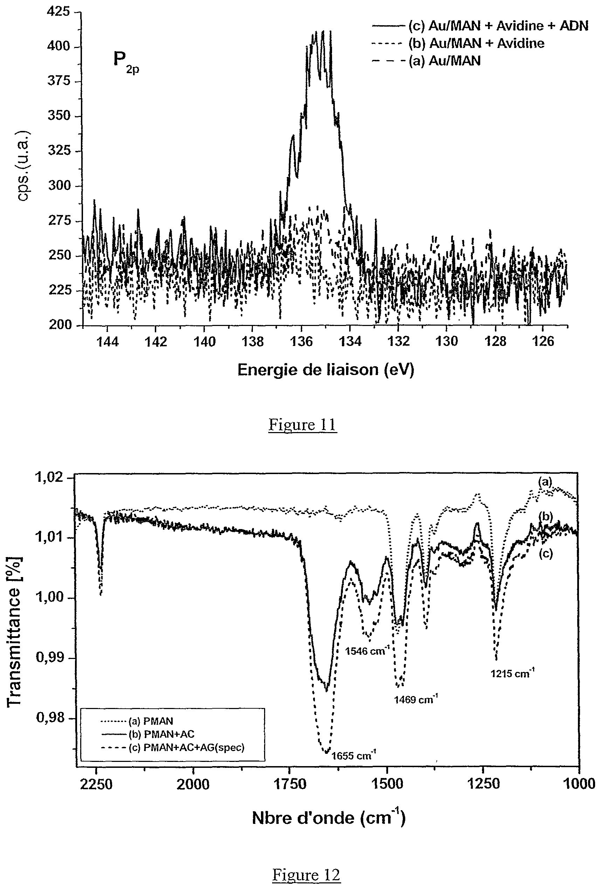

La présence de l'ODN est détectée par spectroscopie de photoélectrons X (XPS). Les courbes correspondant à cette analyse ainsi qu'à celle d'une lame recouverte d'un simple film de PMAN électro-greffé et à celle de la lame obtenu ci-dessus à l'exemple 8 (après fixation de l'avidine) sont représentées sur la figure 11 annexée. La région P₂ₚ montre la présence des atomes de phosphore des groupements phosphates des bases de l'ODN.

Ces résultats montrent que la lame préparée conformément à l'exemple 8 permet de fixer l'avidine dans une conformation où elle conserve son activité, par réaction avec une molécule porteuse d'un fragment biotine ayant une très grande affinité pour l'avidine.

### EXEMPLE 10: FIXATION D'ANTI-CORPS SUR UN FILM DE PMAN ÉLECTRO-GREFFÉ ET VÉRIFICATION DE SON ACTIVITÉ.

On illustre ici le fait qu'un film électro-greffé peut être utilisé comme primaire de fixation de molécules de structure tridimensionnelle complexe, et où la structure est déterminante dans les propriétés de la molécule. La grande accessibilité des groupements fonctionnels d'intérêt présents sur la surface permet en effet une distorsion minimale de la protéine sonde, qui peut ainsi conserver une conformation active.

On réalise pour cela la fixation d'un anti-corps, l'immunoglobuline anti-rabbit IgG. L'activité et la spécificité de cet anti-corps sont ensuite vérifiés par réaction d'une part avec un anti-gène spécifique (rabbit IgG), et d'autre part avec un anti-gène non spécifique (sheep IgG).

Il est à noter que la fixation d'anti-corps ouvre notamment la voie vers la fixation de cellule via des polymères électro-greffés.

Pour permettre la fixation d'anticorps sur une surface (par exemple sur le transducteur d'un capteur), il est en général nécessaire, au préalable, de modifier l'électrode. De ce fait, de nombreux groupements superficiels peuvent être créés, mais qui doivent permettre le couplage des immunoglobulines, aussi trois types de fonctions ont retenu notre attention : amine, alcool, cyano.

Les fonctions amine et alcool sont souvent utilisées pour fixer des anticorps sur une surface. Il existe ainsi de nombreux agents de couplage commerciaux permettant de créer des liaisons covalentes entre les fonctions superficielles et celles des immunoglobulines.

Par contre, la fonction cyano permet la fixation directe de la biomolécule. Cette méthode est originale et n'a jamais été utilisée pour fixer une immunoglobuline à une surface, et notamment à une surface conductrice.

Les anticorps contiennent différentes fonctions : amine (NH₂), acide (COOH), hydroxyle (OH) et ponts disulfure (S-S) pouvant conduire à leurs accrochages sur des surfaces. Les fonctions amine et acide proviennent des acides aminés, constituants des anticorps, et sont réparties dans toute la protéine. Il y a donc plusieurs sites de fixation possibles, permettant un couplage aisé mais non localisé, pouvant conduire à une inactivation de l'anticorps (dénaturation) vis-à-vis de l'antigène. Les fonctions amine et acide permettent de greffer l'anticorps entier à une surface. Au contraire, il est nécessaire de couper les ponts disulfure (S-S) et donc de générer des fonctions thiol (SH). Ce sont alors les fragments FAB' qui sont fixés. La couche de biomolécules ainsi obtenue est plus dense en sites réactifs et de plus les anticorps sont orientés car les fonctions thiol sont présentes dans la partie constante restante. Cette dernière caractéristique est importante car l'anticorps ne se fixe pas par l'un de ses sites actifs. Les immunoglobulines ainsi immobilisées ont moins de risque d'être dénaturées et inactivées vis-à-vis des antigènes.

Excepté dans le cas des fonctions cyano, il est indispensable d'utiliser un agent de couplage qui permet de relier de façon covalente les fonctions de la surface et de l'anticorps. On illustre ici le fait que les films électro-greffés permettent à la fois d'assurer une couche primaire et d'offrir des groupements fonctionnels d'intérêt immédiatement disponibles pour l'accrochage de molécules sondes biologiques.

Dans un tube on introduit une solution à 2 mg/l d'anti-rabbit IgG en tampon PBS (pH 7,2). On plonge dans cette solution une lame d'or recouverte d'un film de PMAN électro-greffé telle que préparée ci-dessus à l'exemple 3. La lame est laissée à réagir pendant 15 heures à 4°C, puis sortie et rincée par jets d'eau désionisée et séchée par soufflage d'azote.

La lame ainsi traitée est replongée dans une solution d'anti-gène spécifique (rabbit-IgG) à 2 mg/l en tampon PBS, et laissée pendant 15 heures à température ambiante. Elle est ensuite sortie, rincée par jets à l'eau désionisée et séchée par soufflage d'azote.

La lame est analysée par IRRAS avant et après traitement par l'anticorps ainsi qu'après traitement par l'antigène.

Les spectres IRRAS ainsi obtenus sont représentés sur la Figure 12 annexée.

L'analyse de ces spectres révèle les bandes amide I (1655 cm⁻¹) et II (1546 cm⁻¹), ainsi que les bandes du squelette de la protéine à 1469 cm⁻¹.

On observe également une augmentation des bandes amide I (1655 cm⁻¹) et II (1546 cm⁻¹), et des bandes du squelette de la protéine à 1469 cm⁻¹, prouvant que la quantité de protéines fixées sur la surface a augmenté (on remarque un quasi doublement de l'intensité de ces bandes sous l'effet du couplage avec l'antigène, dont la taille est approximativement la même que celle de l'anti-corps).

Ce résultat est d'autant plus probant que lorsque l'on traite dans les mêmes conditions une lame recouverte d'anti-corps (anti-rabbit IgG) dans une solution contenant un anti-gène non spécifique (sheep IgG), on n'observe - sur le spectre IRRAS (non représenté) - qu'une très faible augmentation des bandes caractéristiques ci-dessus (probablement du fait d'adsorptions non spécifiques).

### EXEMPLE 11 : FIXATION D'ADN SUR UN FILM DE PMAN ÉLECTRO-GREFFÉ.

On illustre ici la fixation d'oligonucléotides (ODN) sur les fonctions réactives d'un polymère électro-greffé, selon une voie alternative de celle vue dans l'exemple 9 ci-dessus.

Pour cela, on utilise les fonctions acide carboxylique d'un polymère électro-greffé pour les faire réagir avec les fonctions amine d'un ODN simple brin portant une fonction amine sur son extrémité 5' :

H₂N - 5' - GCTTGCTGAAGTTCG - 3' (H₂N- SEQ ID N° 1)

La fixation de ce brin est ensuite révélée par hybridation avec le brin complémentaire non fonctionnalisé :

5' - CGAACGACTTCAAGC - 3' (SEQ ID N°2)

De façon à illustrer ici le recours possible à des bras espaceurs, on effectue une fonctionnalisation complémentaire préalable du film : on part d'un film de PMAN électro-greffé, sur lequel les nitriles sont réduits en amines, par exemple comme indiqué dans l'exemple 3. Les amines sont mises à réagir avec de l'anhydride glutarique pour obtenir des fonctions acide carboxylique, selon le protocole suivant : dans un tube, on introduit 30 ml de THF séché sur tamis moléculaire (4 Å), dans lesquels on rajoute 1 g d'anhydride glutarique. La lame porteuse de groupements amine est introduite dans le tube, et laissée à réagir pendant 17 heures à une température de 50°C sous argon et agitation magnétique (septum). La lame est ensuite rincée à l'acétone, puis séchée par soufflage d'azote.

Les groupements amine résiduels sont ensuite détruits par amidation avec l'anhydride trifluoroacétique, selon le protocole suivant : dans un tube, on introduit 30 ml de THF séché sur tamis moléculaire, puis 1 ml d'anhydride trifluoroacétique. On introduit ensuite la lame de l'étape précédente, qui est laissée à réagir pendant 2,5 minutes sous argon avec agitation magnétique, à température ambiante. La lame est sortie puis rincée par trempage dans l'eau désionisée pendant 5 minutes, puis par jets d'eau désionisée, et enfin séchée par soufflage d'azote.

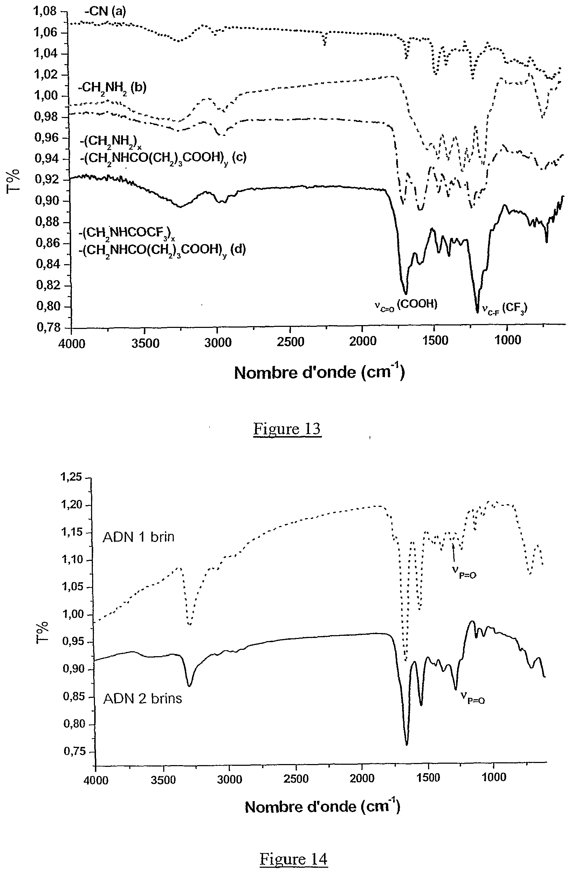

La lame est analysée par IRRAS avant et après chacune des étapes ; les spectres ainsi obtenus étant représentés sur la Figure 13 annexée.

Avant la réaction d'amidation, l'analyse IRRAS révèle les bandes d'élongation C=O de groupements acide carboxylique (1700 cm⁻¹), ainsi que les bandes amide II à 1591 cm⁻¹, plaidant pour une structure au moins partiellement fonctionnalisée de structure : R-(CH₂-NH₂)ₓ-(CH₂-NH(C=O)-(CH₂)₃-COOH)_{y}, où y/(x+y) est le taux de substitution des groupements amine initiaux par l'anhydride glutarique, et R le squelette du PMAN électro-greffé.

Après la réaction d'amidation, l'analyse IRRAS confirme les bandes d'élongation C=O de groupements acide carboxylique (1700 cm⁻¹), ainsi que les bandes amide II à 1591 cm⁻¹, et révèle les bandes d'élongation C-F des groupements CF₃ (1203 cm⁻¹), plaidant pour une structure fonctionnalisée de structure suivante :

R-(CH₂-NH(C=O)CF₃)ₓ-(CH₂-NH(C=O)-(CH₂)₃-COOH)_{y},

dans laquelle y/(x+y) est le taux de substitution des groupements amine initiaux par l'anhydride glutarique, et R le squelette du PMAN électro-greffé.

La surface ainsi fonctionnalisée est ensuite mise à réagir avec une solution à 15 µM de l'ODN (15-mer) aminé en position 5', dans l'eau désionisée, en présence de N-hydroxy-succinimide (NHS) et de 1-3(diméthylaminopropyl)-3-éthyl carbodiimide chlorhydrique (EDC), à température ambiante pendant 15 heures.

La lame est sortie, rincée à l'eau désionisée et séchée par soufflage à l'azote, puis analysée par IRRAS et XPS.

La lame ainsi obtenue est ensuite mise à réagir avec une solution du brin d'ODN complémentaire du premier brin fixé, dans l'eau désionisée, pendant 15 heures à température ambiante, sortie, rincée à l'eau désionisée, puis séchée par soufflage d'azote.

Les spectres IRRAS ainsi obtenus sont représentés sur la Figure 14 annexée.

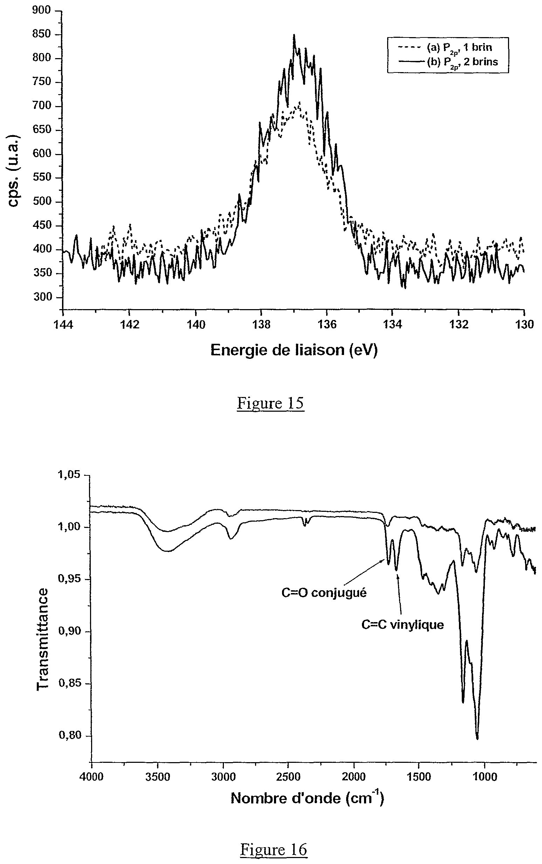

Les spectres XPS sont représentés sur la Figure 15 annexée.

L'analyse des spectres IRRAS avant réaction avec le brin d'ODN complémentaire du premier brin fixé révèle l'apparition de bandes amide des bases azotées, ainsi que des bandes d'élongation des liaisons P=O des groupements phosphate, vers 1273 cm⁻¹.

L'analyse XPS de la lame révèle la présence de phosphore à une énergie de liaison caractéristique des groupements phosphate de l'ADN.

L'analyse des spectres IRRAS après réaction avec le brin d'ODN complémentaire du premier brin fixé confirme les bandes amide des bases azotées, et montre une augmentation significative de l'intensité des bandes d'élongation des liaisons P=O des groupements phosphate, vers 1273 cm⁻¹. Cette observation est confirmée par l'analyse XPS.

### EXEMPLE 12 : ELECTROGREFFAGE D'UN MONOMÈRE PRÉCURSEUR PORTEUR D'UN BRAS ESPACEUR.

On illustre ici l'électrogreffage d'un monomère porteur d'un bras espaceur comportant 6 atomes de carbone, et porteur d'un groupement amine d'intérêt (sous forme de chlorure d'ammonium) : l'AminoHexyl MéthAcrylAmide (AHMAA) de formule suivante :

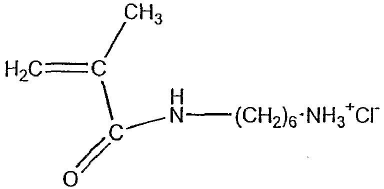

Cet exemple illustre la possibilité de réaliser l'électrogreffage d'un monomère portant des groupements protiques, un bras espaceur, donnant lieu à un polymère électro-greffé dont les groupements fonctionnels d'intérêt sont tous accessibles. Ils constituent une voie alternative à celle de l'exemple n°3 pour obtenir un film électro-greffé porteur de groupements amine. Les exemples, 4, 5, 6 et 11, reconduits avec les films du présent exemple, donnent des résultats analogues.

On réalise un film de poly-AHMAA (PAHMMA) sur or en effectuant 20 balayages voltammétriques de - 0,5 à - 2,3 V/(Ag⁺/Ag) à 100 mV/s sur une surface d'or plongée dans une solution à 0,25 mol/l de AHMAA dans la DMF, en présence de 5.10⁻² mol/l de TEAP. La lame est sortie de la cellule électrochimique puis rincée énergiquement à l'eau désionisée puis à l'acétone, et enfin séchée sous courant d'azote.

Son spectre IRRAS (non représenté) est caractéristique du polymère attendu, avec notamment les bandes caractéristiques du groupement ammonium à 1613, 1522 et l'harmonique à 2050 cm⁻¹, ainsi qu'un ensemble de bandes fines entre 2400 et 2800 cm⁻¹, et la bande d'élongation N-H⁺ à 3327 cm⁻¹, en plus des bandes amide à 1535 et 1465 cm⁻¹.

Le film de PAHMAA obtenu est ensuite trempé sous agitation pendant 15 minutes dans une solution de soude (NaOH) à 1 mol/l. La lame est ensuite rincée à l'eau désionisée puis à l'acétone et enfin séchée comme précédemment. Son spectre IRRAS (non représenté) révèle la disparition complète des bandes caractéristiques des groupements ammonium, et l'apparition des bandes caractéristiques des groupements amine à 2933 cm⁻¹ (élongation CH₂-NH₂) et 3360 cm⁻¹ (élongation N-H d'une amine primaire). Ce résultat démontre l'accessibilité totale des groupements ammonium qui sont convertis en amines par réaction acide-base avec la soude.

La lame est ensuite à nouveau trempée dans une solution d'acide chlorhydrique à 1 mol/l pendant 20 minutes, puis rincée et séchée.

Son spectre IRRAS (non représenté) est en tous points identique à celui obtenu précédemment, ce qui montre que les groupements amine formés sont eux-mêmes totalement convertis, à nouveau, en groupements ammonium.

Ces résultats sont confirmés par XPS (non représentés), où l'on observe nettement la présence de chlore sur le spectre global lorsque le film est sous forme de chlorure d'ammonium, et son absence lorsqu'il est sous forme d'amine. Dans le même temps, la région du seuil K de l'azote (N1s) comporte deux pics à 400 (amide) et 402 eV (ammonium) lorsque le film est sous forme d'ammonium, et un seul pic centré vers 400,5 eV lorsqu'il est sous forme d'amine.

### EXEMPLE 13 : PRÉPARATION D'UN FILM DE DEXTRANE/MÉTHACRYLATE ÉLECTRO-GREFFÉ.

Le but de cet exemple est de démontrer que l'on peut réaliser l'électrogreffage d'une macromolécule partiellement dérivatisée par des groupements vinyliques activés, et disposer des groupements fonctionnels non dérivatisés de ladite molécule pour une post-fonctionnalisation ultérieure. La macromolécule utilisée est un dextrane fonctionnalisé par des groupements glycidyl-méthacrylate (GMA).

Le macro-électrophile considéré, nommé dextrane-GMA, est représenté par la formule ci-après :

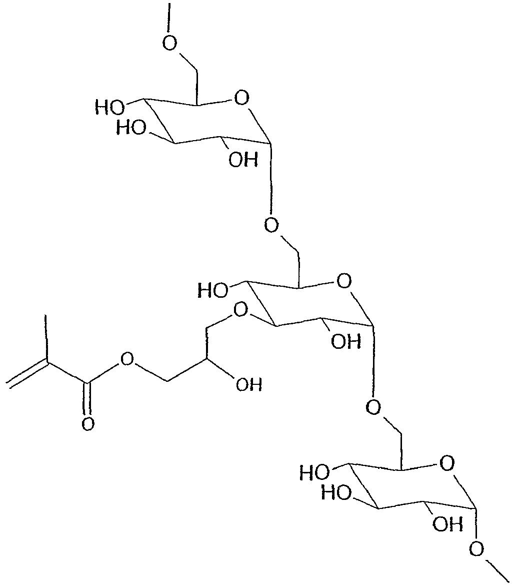

Dans la formule ci-dessus, et par souci de clarté, seul un hydroxyle a été indiqué comme substitué par le GMA. La proportion varie en fait en fonction des conditions de synthèse.

Le dextrane-GMA est obtenu à partir d'un dextrane de masse M = 15000 et de méthacrylate de glycidyl (2,3-epoxypropyl méthylpropénoate), selon le protocole décrit dans W.N.E. par van Dijk-Wolthuis et al., Macromolecules, 1995, 28, 6317.

L'analyse du produit par RMN ¹H et ¹³C (non représentée) montre que le dextrane-GMA est obtenu avec un degré de substitution de 77 %.

On réalise une solution, dite solution de dextrane-GMA, en dissolvant 0,25 g du dextrane-GMA dans 50 ml de DMF à 10⁻² mol/l en TEAP. La solution est donc environ à 3,3.10⁻⁴ mol/l en dextrane-GMA.

On prépare quelques surfaces d'or, appelées lames d'or, en pulvérisant de l'or par effet Joule sur des lames de verres pré-traitées avec un voile de chrome.

On réalise selon le procédé conforme à l'Invention, l'électrogreffage du dextrane-GMA sur une lame d'or utilisée comme électrode de travail d'un montage à trois électrodes, dans la solution de dextrane-GMA, selon le protocole de potentiel suivant : conditions voltammétriques avec 15 balayages de Eᵢₙᵢₜᵢₐₗ = -0,6 V/(Ag⁺/Ag) à E_{final} = -2,8 V/(Ag⁺/Ag) à une vitesse de -100 mV/s.

On obtient, après rinçage de la lame à l'acétone et à l'eau, un film de 200 nm d'épaisseur, dont les caractéristiques, vérifiées par spectrophotométrie IR correspondent à celles du poly(dextrane-GMA) (Figure 16 sur laquelle la courbe basse représente le spectre IR de la lame avant rinçage et la courbe haute représente le spectre IR après rinçage).

On observe en particulier la présence d'une bande vers 3500 cm⁻¹, caractéristique des nombreux groupements OH du dextrane électro-greffé.

## Revendications

1. Support solide comportant au moins une région conductrice et/ou semi-conductrice de l'électricité à oxyde réductible sur sa surface, **caractérisé par le fait qu'**au moins une zone de ladite surface est fonctionnalisée par un film organique électro-greffé obtenu à partir de précurseurs organiques électro-actifs comportant chacun au moins un groupement fonctionnel d'intérêt, lesdits précurseurs organiques étant choisis parmi les monomères vinyliques ou cycliques porteurs de groupements protiques, éventuellement en mélange avec des précurseurs organiques électro-actifs ne comportant pas de groupement fonctionnel d'intérêt, et **par le fait que** le nombre de groupements fonctionnels d'intérêt accessibles pour la formation d'une liaison covalente, ionique ou hydrogène avec un groupement complémentaire au sein dudit film représente au moins 90 % du nombre total des groupements organiques fonctionnels d'intérêt.

2. Support selon la revendication 1, **caractérisé par le fait que** lesdits précurseurs organiques sont choisis parmi les monomères vinyliques activés et les molécules clivables par attaque nucléophile, répondant respectivement aux formules (I) et (II) suivantes : 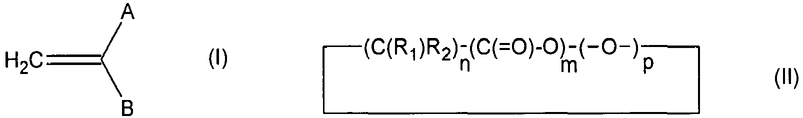 dans lesquelles :
- A, B, R₁ et R₂, identiques ou différents, représentent un atome d'hydrogène, un radical alkyle en C₁-C₄, un radical nitrile ou une fonction organique choisie parmi les fonctions hydroxyle, aminé : -NHₓ avec x = 1 ou 3, thiol, acide carboxylique, ester, amide : -C(=O)NH_{y} dans laquelle y = 1 ou 2, imide, imido-ester, aromatique, halogénure d'acide : -C(=O)X dans laquelle X représente un atome d'halogène choisi parmi le fluor, le chlore et le brome, anhydride d'acide : -C(=O)OC(=O), nitrile, succinimide, phtalimide, isocyanate, époxyde, siloxane : -Si(OH)_{z} dans laquelle z est un nombre entier compris entre 1 et 3 inclusivement, benzoquinone, carbonyle-diimidazole, para-toluène sulfonyle, para-nitrophényl chloroformiate, éthylénique et vinylique ou un groupement organique (ou bras espaceur) portant au moins une des fonctions énumérées ci-dessus ; étant entendu que l'un au moins de A et B et que l'un au moins de R₁ et R₂ représente une desdites fonctions organiques ou un groupement organique portant au moins une desdites fonctions ;
- n, m et p, identiques ou différents, sont des nombres entiers compris entre 0 et 20 inclusivement.

3. Support selon la revendication 2, **caractérisé par le fait que** les monomères vinyliques activés de formule (I) sont choisis parmi l'hydroxyéthylméthacrylate, l'acrylate et le méthacrylate de glycidyle, l'acide acrylique, l'acide méthacrylique, l'aminopropyl méthacrylamide, et l'aminohexyl méthacrylamide.

4. Support selon la revendication 2, **caractérisé par le fait que** les molécules clivables par attaque nucléophile de formule (II) sont des oxydes d'éthylène substitués.

5. Support selon l'une quelconque des revendications précédentes, **caractérisé par le fait que** la surface conductrice ou semi-conductrice de l'électricité est une surface d'inox, d'acier, de fer, de cuivre, de nickel, de cobalt, de niobium, d'aluminium, d'argent, de titane, de silicium, de nitrure de titane, de nitrure de tungstène, de nitrure de tantale ou une surface métallique noble choisie par les surfaces d'or, de platine, d'iridium ou de platine iridié.

6. Support selon l'une quelconque des revendications précédentes, **caractérisé par le fait que** la densité des groupements fonctionnels d'intérêt accessibles est de préférence comprise entre 10⁴/µm² et 10¹⁰/µm².

7. Procédé de préparation d'un support tel que défini à l'une quelconque des revendications 1 à 6, **caractérisé par le fait qu'**il consiste à réaliser, en une seule étape, l'électrogreffage de précurseurs organiques électro-actifs sur au moins une zone d'au moins une région conductrice et/ou semi-conductrice de l'électricité à oxyde réductible sur sa surface d'un support solide, par électrolyse en milieu organique, d'une composition renfermant, dans ledit milieu organique, au moins un précurseur organique électro-actif comportant au moins un groupement fonctionnel d'intérêt, par mise en contact de ladite composition avec ladite zone, cette dernière étant soumise à un protocole de potentiel au cours duquel elle est portée, pendant tout ou partie du protocole de potentiel, à un potentiel supérieur ou égal à un potentiel électrique seuil déterminé par rapport à une électrode de référence, ledit potentiel électrique seuil étant le potentiel au-delà duquel se produit le greffage desdits précurseurs et **par le fait qu'**un taux d'accessibilité en groupements fonctionnels d'intérêt d'au moins 90 % (en nombre) est obtenu :
a) en ajustant le protocole de potentiel de façon à entraîner un taux de greffage inférieur ou égal à 60 %, et/ou
b) par l'utilisation d'une composition dans laquelle les précurseurs organiques électro-actifs fonctionnalisés sont présents en mélange avec des précurseurs organiques électro-actifs ne comportant pas de groupement fonctionnel d'intérêt, ces derniers représentant alors de 0,1 % à 95 % du nombre total de précurseurs présents au sein de ladite composition, et/ou
c) par l'utilisation de précurseurs organiques électro-actifs choisis parmi ceux dans lesquels le groupement fonctionnel d'intérêt est porté à l'extrémité d'un bras espaceur.

8. Procédé selon la revendication 7, **caractérisé par le fait que** le taux de greffage est ajusté à une valeur comprise entre 10 et 40 %.

9. Procédé selon la revendication 7 ou 8, **caractérisé par le fait que**, selon la variante b), les précurseurs organiques électro-actifs ne comportant pas de groupement fonctionnel d'intérêt représentent de 0,1 à 50 % du nombre total de précurseurs présents au sein de ladite composition.

10. Procédé selon l'une quelconque des revendications 7 à 9, **caractérisé par le fait que** la concentration en précurseurs organiques électro-actifs comportant un groupement fonctionnel d'intérêt est comprise entre 0,1 et 10 mol/l.

11. Procédé selon l'une quelconque des revendications 7 à 10, **caractérisé par le fait que** la concentration en précurseurs organiques électro-actifs ne comportant pas de groupement fonctionnel d'intérêt au sein de ladite composition organique est comprise entre 10⁻³ et 18 mol/l.

12. Procédé selon l'une quelconque des revendications 7 à 11, **caractérisé par le fait que** l'électrolyse est réalisée en conditions voltammétriques.

13. Procédé selon l'une quelconque des revendications 7 à 12, **caractérisé par le fait que** le milieu organique est choisi parmi la diméthylformamide, l'acétate d'éthyle, l'acétonitrile et le tétrahydrofurane.

14. Procédé selon l'une quelconque des revendications 7 à 13, **caractérisé par le fait que** le milieu organique renferme en outre au moins un électrolyte support.

15. Utilisation d'un support solide tel que défini à l'une quelconque des revendications 1 à 6, à titre de primaire d'adhésion pour la fixation de molécules d'intérêt ou d'objets porteurs d'une fonction complémentaire.

16. Utilisation selon la revendication 15, **caractérisée par le fait que** les molécules d'intérêt sont des protéines et que ledit support est alors utilisé comme surface bio-active ou comme puce à protéines.

17. Utilisation selon la revendication 15, **caractérisée par le fait que** les molécules d'intérêt sont des molécules d'acide nucléique et que ledit support est alors utilisé comme surface bio-active ou comme puce à acide nucléique.

18. Utilisation selon la revendication 15, **caractérisée par le fait que** les molécules d'intérêt ou les objets porteurs d'une fonction complémentaire sont choisis parmi les polymères biocompatibles et que ledit support est alors utilisé comme surface biocompatible ou comme surface à propriétés encapsulantes.

19. Utilisation d'un support solide tel que défini à l'une quelconque des revendications 1 à 6, pour réaliser le collage d'objets sur des surfaces conductrices ou semi-conductrices par réactions chimiques de surface.

## Patentansprüche

1. Festes Substrat, das mindestens einen elektrisch leitenden und/oder halbleitenden Bereich mit reduzierbarem Oxid auf seiner Oberfläche enthält, **dadurch gekennzeichnet, dass** mindestens eine Zone der Oberfläche durch einen elektrogepfropften organischen Film funktionalisiert ist, der aus elektroaktiven organischen Vorläufern erhalten wird, die jeweils mindestens eine funktionelle Gruppe von Interesse enthalten, wobei die organischen Vorläufer ausgewählt sind aus protische Gruppen tragenden Vinyl- oder zyklischen Monomeren, gegebenenfalls in Mischung mit elektroaktiven organischen Vorläufern, die keine funktionelle Gruppe von Interesse enthalten, und dadurch, dass die Anzahl der funktionellen Gruppen von Interesse, die für die Bildung einer kovalenten, ionischen oder Wasserstoffbindung mit einer komplementären Gruppe innerhalb des Films zugänglich sind, mindestens 90 % der Gesamtzahl der funktionellen organischen Gruppen von Interesse ausmacht.

2. Substrat nach Anspruch 1, **dadurch gekennzeichnet, dass** die organischen Vorläufer ausgewählt sind aus den aktivierten Vinylmonomeren und den Molekülen, die durch nukleophilen Angriff spaltbar sind, die jeweils den folgenden Formeln (I) und (II) entsprechen: 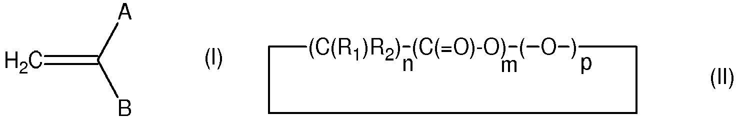 worin:
- A, B, R₁ und R₂, identisch oder verschieden, für ein Wasserstoffatom, einen C₁-C₄-Alkylrest, einen Nitrilrest oder eine organische Funktion stehen, ausgewählt aus Hydroxyl-, Aminfunktionen: -NHₓ mit x = 1 oder 3, Thiol, Carbonsäure, Ester, Amid: -C(=O)NH_{y}, worin y = 1 oder 2, Imid, Imidoester, aromatisch, Säurehalogenid: -C(=O)X, worin X für ein Halogenatom steht, ausgewählt aus Fluor, Chlor und Brom, Säureanhydrid: -C(=O)OC(=O), Nitril, Succinimid, Phthalimid, Isocyanat, Epoxid, Siloxan: -Si(OH)_{z}, worin z eine ganze Zahl zwischen 1 und 3 einschließlich ist, Benzochinon, Carbonyldiimidazol, para-Toluolsulfonyl, para-Nitrophenylchlorformiat, Ethylen und Vinyl oder eine organische Gruppe (oder ein Abstandhalter-Arm), die mindestens eine der vorgenannten Funktionen trägt; wobei mindestens eines von A und B und mindestens eines von R₁ und R₂ für eine der genannten organischen Funktionen oder eine organische Gruppe steht, die mindestens eine der genannten Funktionen trägt;
- n, m und p, identisch oder verschieden, ganze Zahlen zwischen 0 und einschließlich 20 sind.

3. Substrat nach Anspruch 2, **dadurch gekennzeichnet, dass** die aktivierten Vinylmonomere der Formel (I) ausgewählt sind aus Hydroxyethylmethacrylat, Glycidylacrylat und -methacrylat, Acrylsäure, Methacrylsäure, Aminopropylmethacrylamid und Aminohexylmethacrylamid.

4. Substrat nach Anspruch 2, **dadurch gekennzeichnet, dass** die durch nukleophilen Angriff spaltbaren Moleküle der Formel (II) substituierte Ethylenoxide sind.

5. Substrat nach einem der vorstehenden Ansprüche, **dadurch gekennzeichnet, dass** die elektrisch leitende oder halbleitende Oberfläche eine Oberfläche aus Edelstahl, Stahl, Eisen, Kupfer, Nickel, Kobalt, Niob, Aluminium, Silber, Titan, Silizium, Titannitrid, Wolframnitrid, Tantalnitrid oder eine Edelmetalloberfläche ist, ausgewählt aus den Oberflächen aus Gold, Platin, Iridium oder Iridiumplatin.

6. Substrat nach einem der vorstehenden Ansprüche, **dadurch gekennzeichnet, dass** die Dichte der zugänglichen funktionellen Gruppen vorzugsweise zwischen 10⁴/µm² und 10¹⁰/µM² liegt.

7. Verfahren zur Herstellung eines Substrats nach einem der Ansprüche 1 bis 6, **dadurch gekennzeichnet, dass** es darin besteht, in einem einzigen Schritt die Elektropfropfung von elektroaktiven organischen Vorläufern auf mindestens einer Zone mindestens eines elektrisch leitenden und/oder halbleitenden Bereichs mit reduzierbarem Oxid auf seiner Oberfläche eines festen Substrats durch Elektrolyse in einem organischen Medium einer Zusammensetzung durchzuführen, die in dem organischen Medium mindestens einen elektroaktiven organischen Vorläufer mit mindestens einer funktionellen Gruppe von Interesse enthält, durch Inkontaktbringen der Zusammensetzung mit der Zone, wobei diese einem Potentialprotokoll unterzogen wird, bei dem sie während des gesamten oder eines Teils des Potentialprotokolls auf ein Potential erhöht wird, das größer als oder gleich einem elektrischen Schwellenpotential ist, das in Bezug auf eine Referenzelektrode bestimmt wird, wobei das elektrische Schwellenpotential das Potential ist, jenseits dessen das Pfropfen der Vorläufer stattfindet, und dadurch, dass eine Zugänglichkeitsrate in funktionellen Gruppen von Interesse von mindestens 90 % (auf die Anzahl bezogen) erhalten wird:
a) durch Anpassung des Potentialprotokolls, um eine Pfropfungsrate von weniger als oder gleich 60 % zu erwirken, und/oder
b) durch Verwendung einer Zusammensetzung, in der die funktionalisierten elektroaktiven organischen Vorläufer in Mischung mit elektroaktiven organischen Vorläufern vorliegen, die keine funktionelle Gruppe von Interesse enthalten, wobei letztere dann 0,1 % bis 95 % der Gesamtzahl der in der Zusammensetzung vorhandenen Vorläufer ausmachen, und/oder
c) durch die Verwendung von elektroaktiven organischen Vorläufern, ausgewählt aus denjenigen, in denen die funktionelle Gruppe von Interesse am Ende eines Abstandhalter-Arms getragen wird.

8. Verfahren nach Anspruch 7, **dadurch gekennzeichnet, dass** die Pfropfungsrate auf einen Wert zwischen 10 und 40% eingestellt wird.

9. Verfahren nach Anspruch 7 oder 8, **dadurch gekennzeichnet, dass** gemäß Variante b), die elektroaktiven organischen Vorläufer, die keine funktionelle Gruppe von Interesse enthalten, 0,1 bis 50 % der Gesamtzahl der in der Zusammensetzung vorhandenen Vorläufer ausmachen.

10. Verfahren nach einem der Ansprüche 7 bis 9, **dadurch gekennzeichnet, dass** die Konzentration an elektroaktiven organischen Vorläufern, die eine funktionelle Gruppe von Interesse enthalten, zwischen 0,1 und 10 Mol/l liegt.

11. Verfahren nach einem der Ansprüche 7 bis 10, **dadurch gekennzeichnet, dass** die Konzentration an elektroaktiven organischen Vorläufern, die keine funktionelle Gruppe von Interesse innerhalb der organischen Zusammensetzung enthalten, zwischen 10⁻³ und 18 Mol/l liegt.

12. Verfahren nach einem der Ansprüche 7 bis 11, **dadurch gekennzeichnet, dass** die Elektrolyse unter voltammetrischen Bedingungen durchgeführt wird.

13. Verfahren nach einem der Ansprüche 7 bis 12, **dadurch gekennzeichnet, dass** das organische Medium ausgewählt ist aus Dimethylformamid, Ethylacetat, Acetonitril und Tetrahydrofuran.

14. Verfahren nach einem der Ansprüche 7 bis 13, **dadurch gekennzeichnet, dass** das organische Medium zusätzlich mindestens einen Trägerelektrolyten beinhaltet.

15. Verwendung eines festen Substrats nach einem der Ansprüche 1 bis 6 als Haftgrundierung zur Bindung von Molekülen von Interesse oder Objekten mit einer komplementären Funktion.

16. Verwendung nach Anspruch 15, **dadurch gekennzeichnet, dass** die Moleküle von Interesse Proteine sind und dass das Substrat dann als bioaktive Oberfläche oder als Proteinchip verwendet wird.

17. Verwendung nach Anspruch 15, **dadurch gekennzeichnet, dass** die Moleküle von Interesse Nukleinsäuremoleküle sind und dass das Substrat dann als bioaktive Oberfläche oder als Nukleinsäurechip verwendet wird.

18. Verwendung nach Anspruch 15, **dadurch gekennzeichnet, dass** die Moleküle von Interesse oder Objekte mit einer komplementären Funktion ausgewählt sind aus biokompatiblen Polymeren und dass das Substrat dann als biokompatible Oberfläche oder als Oberfläche mit einkapselnden Eigenschaften verwendet wird.

19. Verwendung eines festen Substrats nach einem der Ansprüche 1 bis 6 zur Verklebung von Objekten auf leitenden oder halbleitenden Oberflächen durch chemische Oberflächenreaktionen.

## Claims

1. Solid support comprising at least one electrically conductive and/or semi-conductive region with reducible oxide on its surface, **characterised by** the fact that at least one zone of said surface is functionalised by an electro-grafted organic film obtained from electro-active organic precursors, each comprising at least one functional group of interest, said organic precursors being chosen from vinylic or cyclic monomers that are carriers of protic groups, optionally as a mixture with electro-active organic precursors that do not comprise a functional group of interest, and by the fact that the number of functional groups of interest that can be accessed for the formation of a covalent, ionic or hydrogen bond with a complementary group in said film represents at least 90 % of the total number of organic functional groups of interest.

2. Support according to claim 1, **characterised by** the fact that said organic precursors are chosen from the activated vinylic monomers and the molecules that are cleavable by nucleophilic attack, having the following formulas (I) and (II), respectively: 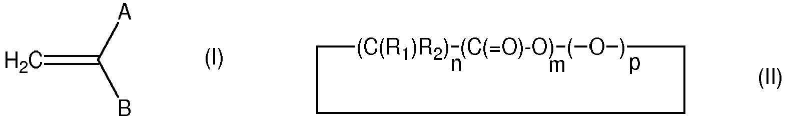 wherein:
- A, B, R₁ and R₂, identical or different, represent a hydrogen atom, a C₁-C₄ alkyl radical, a nitrile radical or an organic function chosen from the hydroxyl, amine functions: -NHₓ with x = 1 or 3, thiol, carboxylic acid, ester, amide: -C(=O)NH_{y} wherein y = 1 or 2, imide, imido-ester, aromatic, acid halide: -C(=O)X wherein X represents a halogen atom chosen from fluorine, chlorine and bromine, acid anhydride: -C(=O)OC(=O), nitrile, succinimide, phthalimide, isocyanate, epoxide, siloxane: -Si(OH)_{z} wherein z is an integer between 1 and 3 inclusively, benzoquinone, carbonyl-diimidazole, paratoluene sulfonyl, para-nitrophenyl chloroformiate, ethylenic and vinylic or an organic group (or spacer arm) carrying at least one of the functions listed hereinabove; with the understanding that at least one of A and B and that at least one of R₁ and R₂ represents one of said organic functions or an organic group carrying at least one of said functions;
- n, m and p, identical or different, are integers between 0 and 20 inclusively.

3. Support according to claim 2, **characterised by** the fact that the activated vinylic monomers having formula (I) are chosen from hydroxyethyl-methacrylate, glycidyl acrylate and methacrylate, acrylic acid, methacrylic acid, aminopropyl methacrylamide, and aminohexyl methacrylamide.

4. Support according to claim 2, **characterised by** the fact that the molecules that are cleavable by nucleophilic attack having formula (II) are substituted ethylene oxides.

5. Support as claimed in any preceding claim, **characterised by** the fact that the electrically conductive or semi-conductive surface is a stainless steel, steel, iron, copper, nickel, cobalt, niobium, aluminium, silver, titanium, silicon, titanium nitride, tungsten nitride, tantalum nitride surface or a noble metal surface chosen from the surfaces of gold, platinum, iridium or platinum iridium.

6. Support as claimed in any preceding claim, **characterised by** the fact that the density of the functional groups of interest that can be accessed ranges preferably between 10⁴/µm² and 10¹⁰/µm².

7. Method for preparing a support such as defined in any of claims 1 to 6, **characterised by** the fact that it consists in carrying out, in a single step, the electro-grafting of electro-active organic precursors on at least one zone of at least one electrically conductive and/or semi-conductive region with reducible oxide on its surface of a solid support, by electrolysis in organic medium, of a composition containing, in said organic medium, at least one electro-active organic precursor comprising at least one functional group of interest, by putting into contact said composition with said zone, with the latter being subjected to a potential protocol during which it is carried, during all or a portion of the potential protocol, to a potential greater than or equal to an electric potential threshold determined with respect to a reference electrode, said electric potential threshold being the potential beyond which the grafting of said precursors is produced and by the fact that a rate of accessibility in functional groups of interest of at least 90 % (in number) is obtained:
a) by adjusting the potential protocol in such a way as to cause a grafting rate less than or equal to 60 %; and/or
b) through the use of a composition wherein the functionalised electro-active organic precursors are present in a mixture with the electro-active organic precursors that do not contain any functional group of interest, the latter then represent from 0.1 % to 95 % of the total number of precursors present in said composition; and/or
c) through the use of electro-active organic precursors chosen from those in which the functional group of interest is carried at the end of a spacer arm.

8. Method according to claim 7, **characterised by** the fact that the rate of grafting is adjusted to a value between 10 and 40 %.

9. Method according to claim 7 or 8, **characterised by** the fact that, according to the alternative b), the electro-active organic precursors that do not contain a functional group of interest represent from 0.1 to 50 % of the total number of precursors present in said composition.

10. Method according to any of claims 7 to 9, **characterised by** the fact that the concentration in electro-active organic precursors comprising a functional group of interest ranges between 0.1 and 10 mol/l.

11. Method according to any of claims 7 to 10, **characterised by** the fact that the concentration in electro-active organic precursors that do not contain a functional group of interest in said organic composition ranges between 10⁻³ and 18 mol/l.

12. Method according to any of claims 7 to 11, **characterised by** the fact that the electrolysis is carried out in voltammetric conditions.

13. Method according to any of claims 7 to 12, **characterised by** the fact that the organic medium is chosen from dimethylformamide, ethyl acetate, acetonitrile and tetrahydrofuran.

14. Method according to any of claims 7 to 13, **characterised by** the fact that the organic medium further contains at least one support electrolyte.

15. Use of a solid support such as defined in any of claims 1 to 6, as an adhesion primer for the fixing of molecules of interest or of objects carrying a complementary function.

16. Use according to claim 15, **characterised by** the fact that the molecules of interest are proteins and that said support is then used as a bio-active surface or as a protein array.

17. Use according to claim 15, **characterised by** the fact that the molecules of interest are nucleic acid molecules and that said support is then used as a bio-active surface or as a nucleic acid array.

18. Use according to claim 15, **characterised by** the fact that the molecules of interest or the objects carrying a complementary function are chosen from biocompatible polymers and that said support is then used as a biocompatible surface or as a surface with encapsulating properties.

19. Use of a solid support according to any of claims 1 to 6, in order to glue objects on conductive or semi-conductive surfaces by surface-based chemical reactions.


### SEQUENCE LISTING

<110> COMMISSARIAT A L'ENERGIE ATOMIQUE
<120> SUPPORT SOLIDE COMPORTANT UNE SURFACE CONDUCTRICE OU SEMI-CONDUCTRICE DE L'ELECTRICITE FONCTIONNALISEE, SON PROCEDE DE PREPARATION ET SES UTILISATIONS
<130> F263 CAS 80 PCT
<150> FR 02/08381
   <151> 2002-07-04
<160> 2
<170> PatentIn version 3.1
<210> 1
   <211> 15
   <212> DNA
   <213> SEQUENCE ARTIFICIELLE : OLIGONUCLEOTIDE
<400> 1
   gcttgctgaa gttcg 15
<210> 2
   <211> 15
   <212> DNA
   <213> SEQUENCE ARTIFICIELLE : OLIGONUCLEOTIDE
<400> 2
   cgaacgactt caagc 15